# EUROPEAN PATENT SPECIFICATION

(11) **EP 3 668 266 B1**
(45) Date of publication and mention of the grant of the patent: **24.04.2024**
(21) Application number: 18849990.9
(22) Date of filing: 24.08.2018
(51) Int. Cl.: H04W 80/02, H04W 88/04, H04W 88/08, H04L 69/30

(54) **COMMUNICATION PROCESSING METHOD AND APPARATUS USING RELAY**
VERFAHREN UND VORRICHTUNG ZUR KOMMUNIKATIONSVERARBEITUNG UNTER VERWENDUNG EINES RELAIS
PROCÉDÉ ET APPAREIL DE TRAITEMENT DE COMMUNICATIONS À L'AIDE DE RELAIS

(30) Priority: 26.08.2017 CN 201710746367
(43) Date of publication of application: 17.06.2020
(73) Proprietor: Huawei Technologies Co., Ltd., Longgang District Shenzhen, Guangdong 518129 (CN)
(72) Inventor: LIU, Jing, Shenzhen, Guangdong 518129 (CN); HAN, Lifeng, Shenzhen, Guangdong 518129 (CN); WANG, Rui, Shenzhen, Guangdong 518129 (CN)
(74) Representative: Pfenning, Meinig & Partner mbB
(86) International application number: PCT/CN2018/102259
(87) International publication number: WO 2019/042228

(56) References cited:
- EP-A1- 2 453 685
- WO-A1-2016/163808
- WO-A1-2017/014716
- CN-A- 102 422 705
- COOLPAD: "Discussion on Radio Bearer Mapping for L2 Relay UE", 3GPP DRAFT; R2-1703371, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Spokane, USA; 20170403 - 20170407 24 March 2017 (2017-03-24), XP051253914, Retrieved from the Internet: URL:http://www.3gpp.org/ftp/tsg_ran/WG2_RL 2/TSGR2_97bis/Docs/ [retrieved on 2017-03-24]
- HUAWEI ET AL: "RRC Connection establishment and bearer setup via L2 Relay", 3GPP DRAFT; R2-1705301 RRC CONNECTION ESTABLISHMENT AND BEARER SETUP VIA L2 RELAY, 3RD GENERATION PARTNERSHIP PROJECT (3GPP), MOBILE COMPETENCE CENTRE ; 650, ROUTE DES LUCIOLES ; F-06921 SOPHIA-ANTIPO , vol. RAN WG2, no. Hangzhou, China; 20170515 - 20170519 14 May 2017 (2017-05-14), XP051275746, Retrieved from the Internet: URL:http://www.3gpp.org/ftp/Meetings_3GPP_ SYNC/RAN2/Docs/ [retrieved on 2017-05-14]
- ERICSSON: "User plane architecture", 3GPP DRAFT; R2-168214 - USER PLANE ARCHITECTURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, Nevada, USA; 20161114 - 20161118 13 November 2016 (2016-11-13), XP051177877, Retrieved from the Internet: URL:http://www.3gpp.org/ftp/Meetings_3GPP_ SYNC/RAN2/Docs/ [retrieved on 2016-11-13]
- "3rd Generation Partnership Project; Technical Specification Group Radio Access Network; E-UTRA and NR; Service Data Adaptation Protocol (SDAP) specification (Release 15 )", 3GPP DRAFT; R2-1707991 DRAFT 37324-010 UPDATES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 20 August 2017 (2017-08-20), XP051317904, Retrieved from the Internet: URL:http://www.3gpp.org/ftp/Meetings_3GPP_ SYNC/RAN2/Docs/ [retrieved on 2017-08-20]
- ERICSSON et al.: "TP to Internal TR on Relay Architecture Options", R2-095306. 3GPP TSG-RAN WG2 #67, 27 August 2009 (2009-08-27), XP050389776,
- NOKIA et al.: "NGAP Protocol Structure with AMF-SMF Separation", R3-172894. 3GPP TSG-RAN WG3#97, 11 August 2017 (2017-08-11), XP051319734,
- HUAWEI et al.: "User Plane and Control Plane Protocol Stack of eRelay , S 2-172690", SA WG2 Meeting #120, 3 April 2017 (2017-04-03), XP051258146,

## Description

### TECHNICAL FIELD

Embodiments of the present invention relate to the wireless communications field, and in particular, to a communication processing method and an apparatus using a relay.

### BACKGROUND

In a wireless communications system, a relay (relay) performs forwarding and amplification on a radio signal sent to a base station or a radio signal received from a base station, thereby expanding signal coverage of the base station. In this way, a signal-to-noise ratio can be increased when a terminal is at a signal coverage edge, thereby improving data transmission quality.

In the specification version 10 formulated by the third generation partnership project (the 3rd generation partnership project, 3GPP) for a long term evolution (long term evolution, LTE) wireless communications system, an air interface exists between a terminal and a relay, and a relay interface exists between the relay and a base station. The air interface and the relay interface use a same frequency, and transmit data through time division multiplexing (time division multiplexing, TDM).

On a control plane protocol layer, there are peer radio resource control (radio resource control, RRC) layers on an air interface. On a user plane protocol layer, different data radio bearers (data radio bearer, DRB) are established between a terminal and a relay for different services of the terminal on an air interface, and different general packet radio service tunneling protocol (general packet radio service (GPRS) tunneling protocol, GTP) tunnels are established between the relay and a base station for different services of the terminal on a relay interface, where the DRBs on the air interface are in a one-to-one correspondence with the GTP tunnels on the relay interface. For downlink transmission, the base station performs mapping from different GTP tunnels on the relay interface to different DRBs on the relay interface. For uplink transmission, the relay performs mapping from different GTP tunnels on the relay interface to different DRBs on the relay interface.

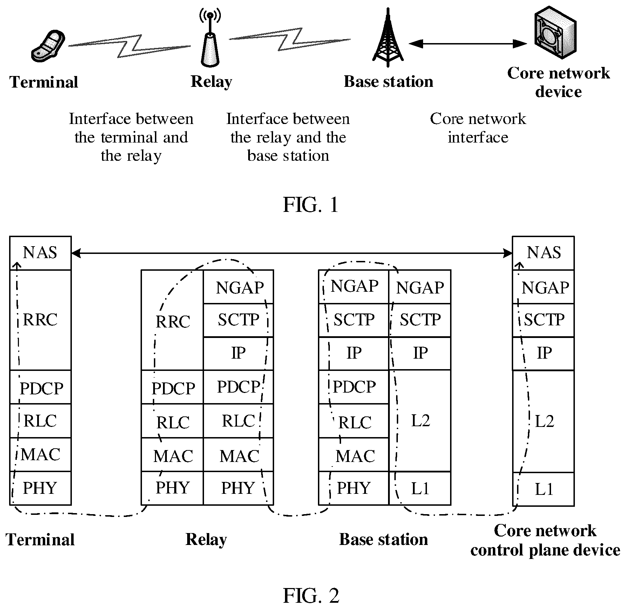

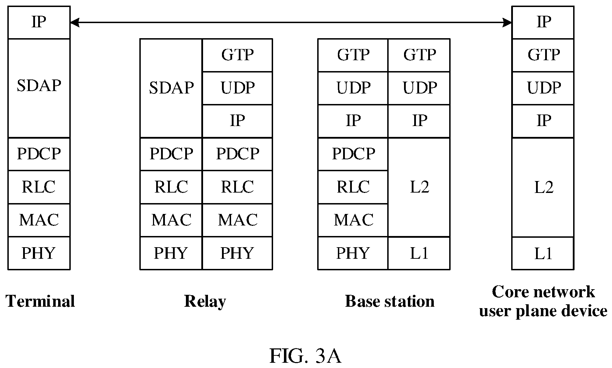

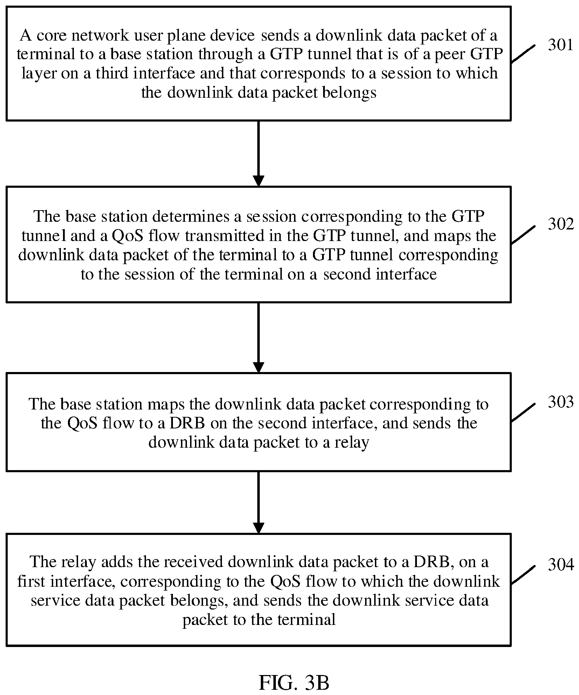

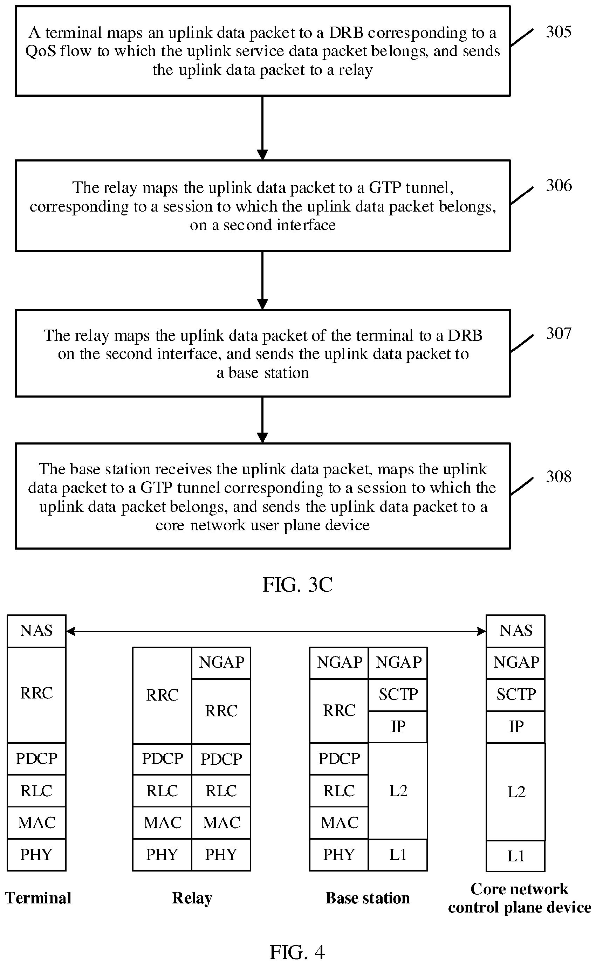

As an LTE system transits to a fifth generation mobile communications system, how to transmit data via a relay in the fifth generation wireless communications system needs to be studied further. COOLPAD: "Discussion on Radio Bearer Mapping for L2 Relay UE", 3rd GENERATION PARTNERSHIP PROJECT, R1-1703371, 2017-04-03, discloses a protocol layer structure of a L2 relay UE in Figure 1 and in Section 3.1 the remote UE RRC messages that need to be relayed by the L2 relay UE and the eNB. The Uu adaptation layer can add bearer ID and UE ID. HUAWEI ET AL: "RRC Connection establishment and bearer setup via L2 Relay", 3rd GENERATION PARTNERSHIP PROJECT, R2-1705301, 2017-05-15, defines the protocol stacks and procedures for layer 2 UE-to-Network relaying. In Figure 3, the adaptation layer may indicate SRB/DRB and the UE ID. The eNB may configure relaying DRB and UE DRB through RRC reconfiguration. WO 2017/014716A1 (INTEL IP CORP [US]) 2017-01-26, discloses the mapping of uplink and downlink data packets to/from Uu DRB's using the information added by the adaptation layer. And ERICSSON: "User plane architecture", 3rd GENERATION PARTNERSHIP PROJECT, R2-168214, 216-11-18, discloses a new adaptation layer is needed in the eNB and the evolved Relay UE which maps the evolved Remote UEs PDCP PDUs the correct evolved Remote UE and to the correct DRB of the evolved Relay UE.

### SUMMARY

Embodiments of this application provide a relay, a base station, and a communications system, to transmit data via a relay in a fifth generation wireless communications system. The subject matter of the invention is defined by appended claims. Further aspects are described in Para.[0007] - [0076] in the following are not part of the invention and only used for supporting the understanding of the invention.

A first aspect of the embodiments of this application provides a relay. The relay includes a control plane protocol layer, where
the control plane protocol layer includes an RRC layer, a PDCP layer, an RLC layer, a MAC layer, and a PHY layer that are on an interface between the relay and a terminal and that are respectively peering to those of the terminal; and
the control plane protocol layer further includes an NGAP layer, an RRC layer, a PDCP layer, an RLC layer, a MAC layer, and a PHY layer that are on an interface between the relay and a base station and that are respectively peering to those of the base station.

According to the technical solution provided in the first aspect, the relay is directly connected to a core network device on the NGAP layer, so that efficiency of communication between the relay and the core network device can be improved.

Based on the first aspect, in a first optional design of the first aspect,
in uplink transmission, the relay is configured to: obtain an uplink RRC message from the peer RRC layer on the interface between the relay and the terminal, generate an uplink NGAP message on the peer NGAP layer on the interface between the relay and the base station based on the uplink RRC message, carry the uplink NGAP message on the peer RRC layer on the interface between the relay and the base station, and send the uplink NGAP message to the base station.

Based on the first aspect or the first optional design of the first aspect, in a second optional design of the first aspect,
in downlink transmission, the relay is configured to obtain a downlink NGAP message from the peer NGAP layer on the interface between the relay and the base station, where the downlink NGAP message is carried on the peer RRC layer on the interface between the relay and the base station; and the relay is further configured to: generate a downlink RRC message on the peer RRC layer on the interface between the relay and the terminal based on the downlink NGAP message, and send the generated downlink RRC message to the terminal.

According to the solutions in the first optional design and the second optional design of the first aspect, an NGAP message between the relay and the base station is carried on the RRC layer, so that SCTP connections established on a relay interface can be reduced, thereby reducing overheads of the SCTP connections.

A second aspect of this application provides a communication processing method. In uplink transmission, the method includes:
obtaining, by the relay, an uplink RRC message from the peer RRC layer on the interface between the relay and the terminal;
generating, by the relay, an uplink NGAP message on the peer NGAP layer on the interface between the relay and the base station based on the uplink RRC message; and
carrying, by the relay, the uplink NGAP message on the peer RRC layer on the interface between the relay and the base station, and sending the uplink NGAP message to the base station.

According to the solution provided in the second aspect, the relay is directly connected to a core network device on the NGAP layer, so that efficiency of communication between the relay and the core network device can be improved. In addition, in uplink transmission, an NGAP message between the relay and the base station is carried on the RRC layer, so that SCTP connections established on a relay interface can be reduced, thereby reducing overheads of the SCTP connections.

Based on the second aspect, in a first possible design of the second aspect, in downlink transmission, the method includes:
obtaining, by the relay, a downlink NGAP message from the peer NGAP layer on the interface between the relay and the base station, where the downlink NGAP message is carried on the peer RRC layer on the interface between the relay and the base station; and
generating, by the relay, a downlink RRC message on the peer RRC layer on the interface between the relay and the terminal based on the downlink NGAP message, and sending the generated downlink RRC message to the terminal.

According to the solution in this design, in downlink transmission, the NGAP message between the relay and the base station is carried on the RRC layer, so that the SCTP connections established on the relay interface can be reduced, thereby reducing the overheads of the SCTP connections.

A third aspect of the embodiments of this application provides a relay. The relay includes a user plane protocol layer, where
the user plane protocol layer includes an SDAP layer, a PDCP layer, an RLC layer, a MAC layer, and a PHY layer that are on an interface between the relay and a terminal and that are respectively peering to those of the terminal;
the user plane protocol layer further includes an adaptation layer, a PDCP layer, an RLC layer, a MAC layer, and a PHY layer that are on an interface between the relay and a base station and that are respectively peering to those of the base station;
in uplink transmission, the adaptation layer is configured to perform at least one of the following operations:
   adding an identifier of a terminal to which an uplink data packet belongs; and
   adding at least one of an identifier of a quality of service flow to which the uplink data packet belongs and an identifier of a session to which the uplink data packet belongs; and
   in downlink transmission, the adaptation layer is configured to perform at least one of the following operations:
      identifying, based on a terminal identifier carried on the adaptation layer, a terminal to which a downlink data packet belongs;
      identifying, based on a quality of service flow identifier carried on the adaptation layer, a quality of service flow to which the downlink data packet belongs; and
      identifying, based on a session identifier carried on the adaptation layer, a session to which the downlink data packet belongs.

According to the solution provided in the third aspect, no GTP tunnel needs to be established between the relay and the base station, thereby reducing resource overheads of the GTP tunnel.

Based on the third aspect, in a first possible design of the third aspect,
in uplink transmission, the adaptation layer is further configured to perform at least one of the following operations:
mapping an uplink data packet transmitted on a DRB on the interface between the terminal and the relay to a DRB on the interface between the relay and the base station for transmission; and
aggregating uplink data packets that are of the terminal and another terminal and that have same quality of service, and mapping the aggregated uplink data packets to a same DRB on the interface between the relay and the base station for transmission.

Based on the third aspect or the first possible design of the third aspect, in a second possible design of the third aspect,
in downlink transmission, the adaptation layer is further configured to recover, from an aggregation packet transmitted on the DRB on the interface between the relay and the base station, the downlink data packet belonging to the terminal.

Each possible function of the adaptation layer is described in any possible design of the third aspect, to improve efficiency of communication between the relay and the base station.

A fourth aspect of the embodiments of this application provides a communication processing method. The method includes:
in uplink transmission, receiving, by a relay, an uplink data packet on the DRB on the interface between the relay and the terminal; and after processing the uplink data packet on the adaptation layer, carrying, by the relay, the processed uplink data packet on the DRB on the interface between the relay and the base station, and sending the processed uplink data packet to the base station, where
the processing performed by the relay on the uplink data packet on the adaptation layer includes at least one of the following operations:
   adding an identifier of a terminal to which the uplink data packet belongs; and
   adding at least one of an identifier of a quality of service flow to which the uplink data packet belongs and an identifier of a session to which the uplink data packet belongs.

According to the solution provided in the fourth aspect, no GTP tunnel needs to be established between the relay and the base station, thereby reducing resource overheads of the GTP tunnel.

Based on the fourth aspect, in a first possible design of the fourth aspect,
in uplink transmission, the processing performed by the relay on the uplink data packet on the adaptation layer further includes at least one of the following operations:
mapping an uplink data packet transmitted on the DRB on the interface between the terminal and the relay to the DRB on the interface between the relay and the base station; and
aggregating uplink data packets that are of the terminal and another terminal and that have same quality of service, and mapping the aggregated uplink data packets to a same DRB on the interface between the relay and the base station for transmission.

Based on the fourth aspect or the first possible design of the fourth aspect, in a second possible design of the fourth aspect,
in downlink transmission, the processing performed by the relay on the downlink data packet on the adaptation layer includes at least one of the following operations:
identifying, based on a terminal identifier carried on the adaptation layer, a terminal to which the downlink data packet belongs;
identifying, based on a quality of service flow identifier carried on the adaptation layer, a quality of service flow to which the downlink data packet belongs;
identifying, based on a session identifier carried on the adaptation layer, a session to which the downlink data packet belongs; and
recovering, from an aggregation packet transmitted on the DRB on the interface between the relay and the base station, the downlink data packet of the terminal.

Based on the fourth aspect, in a third possible design of the fourth aspect,
the mapping, by the relay, an uplink data packet transmitted on the DRB on the interface between the terminal and the relay to the DRB on the interface between the relay and the base station for transmission includes at least one of the following manners:
mapping, by the relay, the uplink data packet to a corresponding DRB based on a mapping relationship between an obtained quality of service flow identifier and the DRB on the interface between the relay and the base station;
mapping, by the relay based on a mapping relationship between the quality of service flow identifier in downlink transmission and the DRB on the interface between the relay and the base station, an uplink data packet corresponding to the quality of service flow identifier to a same DRB on the interface between the relay and the base station; and
attaching, by the relay based on a mapping relationship between an obtained quality of service flow identifier and a DSCP, a DSCP label to the uplink data packet corresponding to the QoS flow ID, and sending the uplink data packet to an uplink data packet filtering template for filtering, to map the uplink data packet corresponding to the QoS flow ID to a corresponding DRB on the interface between the relay and the base station, where the mapping relationship is configured by a network management system of the relay and is sent by the network management system of the relay to the relay.

Each function of the adaptation layer is described in any possible design of the fourth aspect, to improve communication efficiency of the relay.

A fifth aspect of the embodiments of this application provides a base station. The base station includes a control plane protocol layer, where
the control plane protocol layer includes an NGAP layer, an RRC layer, a PDCP layer, an RLC layer, a MAC layer, and a PHY layer that are respectively peering to those of a relay.

Based on the fifth aspect, in a first possible design of the fifth aspect,
in downlink transmission, the base station is configured to: generate a downlink NGAP message on the NGAP layer peering to the relay, carry the downlink NGAP message on the RRC layer peering to the relay, and send the downlink NGAP message to the relay.

Based on the fifth aspect or the first possible design of the fifth aspect, in a second possible design of the fifth aspect,
in uplink transmission, the base station is configured to receive an uplink NGAP message sent by the relay, where the uplink NGAP message is sent by being carried on the RRC layer of the relay peering to the base station.

The fifth aspect and the possible designs of the fifth aspect have same beneficial effects as the first aspect and the possible designs of the first aspect do.

A sixth aspect of the embodiments of this application provides a communication processing method. The method includes:
in downlink transmission, generating, by a base station, a downlink NGAP message on the NGAP layer peering to the relay, carrying the downlink NGAP message on the RRC layer peering to the relay, and sending the downlink NGAP message to the relay; and
in uplink transmission, receiving, by the base station, an uplink NGAP message sent by the relay, where the uplink NGAP message is sent by being carried on the RRC layer of the relay peering to the base station.

The technical solutions in the sixth aspect and the second aspect have same beneficial effects.

A seventh aspect of the embodiments of this application provides a base station. The base station includes a user plane protocol layer, where
the user plane protocol layer includes an adaptation layer, a PDCP layer, an RLC layer, a MAC layer, and a PHY layer that are on an interface between a relay and the base station and that are respectively peering to those of the relay;
in downlink transmission, the adaptation layer is configured to perform at least one of the following operations:
   adding an identifier of a terminal to which a downlink data packet belongs; and
   adding at least one of an identifier of a quality of service flow to which the downlink data packet belongs and an identifier of a session to which the downlink data packet belongs; and
   in uplink transmission, the adaptation layer is configured to perform at least one of the following operations:
      identifying, based on a terminal identifier carried on the adaptation layer, a terminal to which an uplink data packet belongs;
      identifying, based on a quality of service flow identifier carried on the adaptation layer, a quality of service flow to which the uplink data packet belongs; and
      identifying, based on a session identifier carried on the adaptation layer, a session to which the uplink data packet belongs.

Based on the seventh aspect, in a first possible design of the seventh aspect,
in downlink transmission, the adaptation layer is further configured to perform at least one of the following operations:
mapping a downlink data packet of the terminal to a DRB on the interface between the relay and the base station for transmission; and
aggregating downlink data packets that are of the terminal and another terminal and that have same quality of service, and mapping the aggregated downlink data packets to a same DRB on the interface between the relay and the base station for transmission.

Based on the seventh aspect or the first possible design of the seventh aspect, in a second possible design of the seventh aspect,
in uplink transmission, the adaptation layer is further configured to recover, from an aggregation packet transmitted on the DRB on the interface between the relay and the base station, the uplink data packet of the terminal.

The seventh aspect and the possible designs of the seventh aspect have same beneficial effects as the third aspect and the possible designs of the third aspect do.

An eighth aspect of this application provides a communication processing method. The method includes:
in downlink transmission, obtaining, by a base station, a downlink data packet of the terminal; and after processing the downlink data packet on the adaptation layer, carrying, by the base station, the processed downlink data packet on a DRB between the base station and the relay, and sending the processed downlink data packet to the relay, where
the processing performed by the base station on the downlink data packet on the adaptation layer includes at least one of the following operations:
   adding an identifier of the terminal to which the downlink data packet belongs; and
   adding at least one of an identifier of a quality of service flow to which the downlink data packet belongs and an identifier of a session to which the downlink data packet belongs.

Based on the eighth aspect, in a first possible design of the eighth aspect,
in downlink transmission, the processing performed by the base station on the downlink data packet on the adaptation layer further includes at least one of the following operations:
mapping the downlink data packet to the DRB on the interface between the relay and the base station; and
aggregating downlink data packets that are of the terminal and another terminal and that have same quality of service, and mapping the aggregated downlink data packets to a same DRB on the interface between the relay and the base station for transmission.

Based on the eighth aspect or the first possible design of the eighth aspect, in a second possible design of the eighth aspect,
in uplink transmission, the processing performed by the base station on the uplink data packet on the adaptation layer includes at least one of the following operations:
identifying, based on a terminal identifier carried on the adaptation layer, a terminal to which the uplink data packet belongs;
identifying, based on a quality of service flow identifier carried on the adaptation layer, a quality of service flow to which the uplink data packet belongs;
identifying, based on a session identifier carried on the adaptation layer, a session to which the uplink data packet belongs; and
recovering, from an aggregation packet transmitted on the DRB on the interface between the relay and the base station, the uplink data packet of the terminal.

The eighth aspect and the possible designs of the eighth aspect have same beneficial effects as the fourth aspect and the possible designs of the fourth aspect do.

A ninth aspect of the embodiments of this application provides a relay. The relay includes a control plane protocol layer, where
the control plane protocol layer includes an RLC layer, a MAC layer, and a PHY layer that are on an interface between the relay and a terminal and that are respectively peering to those of the terminal;
the control plane protocol layer further includes an adaptation layer, an RLC layer, a MAC layer, and a PHY layer that are on an interface between the relay and a base station and that are respectively peering to those of the base station;
in uplink transmission, the adaptation layer is configured to perform at least one of the following operations:
   adding an identifier of the terminal to which an uplink RRC message generated by the terminal belongs;
   adding indication information, where the indication information is used to indicate a mapping relationship between the uplink RRC message and an SRB on the interface between the terminal and the relay; and
   mapping an uplink data packet into which the uplink RRC message is encapsulated to an SRB or a DRB on the interface between the relay and the base station for transmission; and
   in downlink transmission, the adaptation layer is configured to perform at least one of the following operations:
      identifying, based on indication information carried on the adaptation layer, that the adaptation layer carries a downlink RRC message, and learning of a mapping relationship between the downlink RRC message and an SRB on the interface between the relay and the terminal; and
      identifying, based on a terminal identifier carried on the adaptation layer, a terminal to which the downlink RRC message belongs.

According to the solution in the ninth aspect, the relay does not need to establish an RRC layer, a PDCP layer, and the like that are respectively peering to those of the terminal, so that complexity of implementing the relay can be reduced. In addition, because an RRC layer message and a PDCP layer message of the terminal are not processed in the relay but are processed by the base station, a delay of the terminal on a control plane can be reduced.

A tenth aspect of the embodiments of this application provides a communication processing method. The method includes:
in uplink transmission, receiving, by a relay, an uplink data packet into which an uplink RRC message generated by the terminal is encapsulated; and after processing the uplink data packet on the adaptation layer, carrying, by the relay, the processed uplink data packet on the SRB or the DRB on the interface between the relay and the base station, and sending the processed uplink data packet to the base station, where
the processing performed by the relay on the uplink data packet on the adaptation layer includes at least one of the following operations:
   adding indication information, where the indication information indicates that the adaptation layer carries the RRC message;
   adding an identifier of the terminal to which the uplink RRC message belongs; and
   mapping the uplink data packet into which the uplink RRC message is encapsulated to the SRB or the DRB on the interface between the relay and the base station for transmission.

Based on the tenth aspect, in a first possible design of the tenth aspect,
in downlink transmission, receiving, by the relay, a downlink data packet into which a downlink RRC message to be sent to the terminal is encapsulated, where the downlink data packet is sent by being carried on the SRB or the DRB on the interface between the relay and the base station, and the processing performed by the relay on the downlink data packet on the adaptation layer includes at least one of the following operations:
identifying, based on indication information carried on the adaptation layer, that the adaptation layer carries the downlink RRC message, and learning of a mapping relationship between the downlink RRC message and the SRB on the interface between the relay and the terminal; and
identifying, based on a terminal identifier carried on the adaptation layer, an identifier of a terminal to which the downlink RRC message belongs.

The tenth aspect and the possible design of the tenth aspect have same beneficial effects as the ninth aspect does.

An eleventh aspect of this application provides a relay. The relay includes a user plane protocol layer, where
the user plane protocol layer includes an RLC layer, a MAC layer, and a PHY layer that are on an interface between the relay and a terminal and that are respectively peering to those of the terminal;
the user plane protocol layer includes an adaptation layer, an RLC layer, a MAC layer, and a PHY layer that are on an interface between the relay and a base station and that are respectively peering to those of the base station;
in uplink transmission, the adaptation layer is configured to perform at least one of the following operations:
   adding an identifier of a terminal to which an uplink data packet belongs; and
   adding indication information, where the indication information is used to indicate a mapping relationship between the uplink data packet and a DRB on the interface between the terminal and the relay; and
   mapping the uplink data packet to a DRB on the interface between the relay and the base station for transmission; and
   in downlink transmission, the adaptation layer is configured to perform at least one of the following operations:
      identifying, based on indication information carried on the adaptation layer, that the adaptation layer carries a downlink data packet, and learning of a mapping relationship between the downlink data packet and the DRB on the interface between the relay and the terminal; and
      identifying, based on a terminal identifier carried on the adaptation layer, an identifier of the terminal to which the downlink data packet belongs.

According to the solution provided in the eleventh aspect, the relay does not need to establish an RRC layer, a PDCP layer, a GTP layer, and the like that are respectively peering to those of the terminal, so that complexity of implementing the relay can be reduced. In addition, because RRC layer data and PDCP layer data of the terminal are not processed in the relay but are processed by the base station, a delay of the terminal on a user plane can be reduced.

Based on the eleventh aspect, in a first possible design of the eleventh aspect,
in uplink transmission, the adaptation layer is further configured to perform at least one of the following operations:
mapping an uplink data packet transmitted on the DRB on the interface between the terminal and the relay to a DRB on the interface between the relay and the base station for transmission; and
aggregating uplink data packets that are of the terminal and another terminal and that have same quality of service, and mapping the aggregated uplink data packets to a same DRB on the interface between the relay and the base station for transmission.

Based on the eleventh aspect, in a second possible design of the eleventh aspect,
in downlink transmission, the adaptation layer is further configured to recover, from an aggregation packet transmitted on the DRB on the interface between the relay and the base station, the downlink data packet of the terminal.

According to the eleventh aspect and the possible designs, efficiency of data transmission between the base station and the relay can be improved by further defining various functions of the adaptation layer.

A twelfth aspect of the embodiments of this application provides a communication processing method. The method includes:
in uplink transmission, obtaining, by the relay, an uplink data packet of the terminal; and after processing the uplink data packet on the adaptation layer, carrying, by the relay, the processed uplink data packet on the DRB on the interface between the relay and the base station, and sending the processed uplink data packet to the base station, where
the processing performed by the relay on the uplink data packet on the adaptation layer includes at least one of the following operations:
   adding an identifier of the terminal to which the uplink data packet belongs;
   adding indication information, where the indication information is used to indicate a mapping relationship between the uplink data packet and the DRB on the interface between the terminal and the relay; and
   mapping the uplink data packet to the DRB on the interface between the relay and the base station for transmission.

Based on the twelfth aspect, in a first possible design of the twelfth aspect,
in uplink transmission, the relay further performs at least one of the following operations on the adaptation layer:
mapping an uplink data packet transmitted on the DRB on the interface between the terminal and the relay to the DRB on the interface between the relay and the base station for transmission; and
aggregating uplink data packets that are of the terminal and another terminal and that have same quality of service, and mapping the aggregated uplink data packets to a same DRB on the interface between the relay and the base station for transmission.

Based on the twelfth aspect or the first possible design of the twelfth aspect, in a second possible design of the twelfth aspect, the method includes:
in downlink transmission, obtaining, by the relay, a downlink data packet of the terminal, where the downlink data packet is carried on the DRB on the interface between the relay and the base station, and the processing performed by the relay on the downlink data packet on the adaptation layer includes at least one of the following operations:
identifying, based on indication information carried on the adaptation layer, that the adaptation layer carries the downlink data packet, and learning of a mapping relationship between the downlink data packet and the DRB on the interface between the relay and the terminal; and
identifying, based on a terminal identifier carried on the adaptation layer, an identifier of the terminal to which the downlink data packet belongs.

Based on the second possible design of the twelfth aspect, in a third possible design of the twelfth aspect,
in downlink transmission, the processing performed by the relay on the downlink data packet on the adaptation layer further includes at least the following operation:
recovering, from an aggregation packet transmitted on the DRB on the interface between the relay and the base station, the downlink data packet of the terminal.

Based on the twelfth aspect, in a fourth possible design of the twelfth aspect,
the mapping, by the relay, an uplink data packet transmitted on the DRB on the interface between the terminal and the relay to the DRB on the interface between the relay and the base station for transmission includes at least one of the following operations:
mapping, by the relay based on the obtained mapping relationship between the DRB on the interface between the relay and the terminal and the DRB on the interface between the relay and the base station, the uplink data packet carried on the DRB on the interface between the relay and the terminal to a corresponding DRB on the interface between the relay and the base station; or
mapping, by the relay based on the mapping relationship between the DRB on the interface between the relay and the terminal and the DRB on the interface between the relay and the base station in downlink transmission, the uplink data packet carried on the DRB between the relay and the terminal to a corresponding DRB on the interface between the relay and the base station.

The solutions in the twelfth aspect and the various possible designs have same beneficial effects as the solutions in the eleventh aspect and the various possible designs do.

A thirteenth aspect of the embodiments of this application provides a base station. The base station includes a control plane protocol layer, where
the control plane protocol layer includes an RRC layer and a PDCP layer that are respectively peering to those of a terminal;
the control plane protocol layer further includes an adaptation layer, an RLC layer, a MAC layer, and a PHY layer that are respectively peering to those of a relay;
in downlink transmission, the adaptation layer is configured to perform at least one of the following operations:
   adding an identifier of a terminal to which a downlink RRC message encapsulated into a downlink data packet belongs;
   adding indication information, where the indication information is used to indicate a mapping relationship between the downlink RRC message encapsulated into the downlink data packet and an SRB on an interface between the terminal and the relay; and
   mapping the downlink data packet to an SRB or a DRB on an interface between the relay and the base station for transmission; and
   in uplink transmission, the adaptation layer is configured to perform at least one of the following operations:
      identifying, based on indication information carried on the adaptation layer, that the adaptation layer carries an uplink RRC message, and learning of a mapping relationship between the uplink RRC message and the SRB on the interface between the relay and the terminal; and
      identifying, based on a terminal identifier carried on the adaptation layer, an identifier of a terminal to which the uplink RRC message belongs.

Based on the thirteenth aspect, in a first possible design of the thirteenth aspect, in a CU-DU networking scenario,
the base station includes a CU and a DU; and on the control plane protocol layer, the CU includes the RRC layer and the PDCP layer that are respectively peering to those of the terminal, the DU includes the RLC layer, the MAC layer, and the PHY layer that are respectively peering to those of the relay, and the adaptation layer that is peering to the relay is located on the CU or the DU.

The solutions in the thirteenth aspect and the various possible designs have same beneficial effects as the solutions in the ninth aspect and the various possible designs do.

A fourteenth aspect of the embodiments of this application provides a communication processing method. The method includes:
in downlink transmission, generating, by the base station, a downlink RRC message of the terminal on the RRC layer peering to the terminal; after processing the downlink RRC message separately on the PDCP layer and the adaptation layer, carrying, by the base station, the processed downlink data packet on the DRB between the base station and the relay, and sending the processed downlink data packet to the relay, where
the processing performed by the base station on the downlink data packet on the adaptation layer includes at least one of the following operations:
   adding an identifier of the terminal to which the downlink RRC message encapsulated into a downlink data packet belongs;
   adding indication information, where the indication information is used to indicate a mapping relationship between the downlink RRC message encapsulated into the downlink data packet and the SRB on the interface between the terminal and the relay; and
   mapping the downlink data packet to the SRB or the DRB on the interface between the relay and the base station for transmission.

Based on the fourteenth aspect, in a first possible design of the fourteenth aspect,
in uplink transmission, the base station further performs at least one of the following operations on the adaptation layer:
identifying, based on indication information carried on the adaptation layer, that the adaptation layer carries an uplink RRC message, and learning of a mapping relationship between the uplink RRC message and the SRB on the interface between the relay and the terminal; and
identifying, based on a terminal identifier carried on the adaptation layer, an identifier of a terminal to which the uplink RRC message belongs.

The solutions in the fourteenth aspect and the various possible designs have same beneficial effects as the solutions in the tenth aspect and the various possible designs do.

A fifteenth aspect of the embodiments of this application provides a base station. The base station includes a user plane protocol layer, where
the user plane protocol layer includes an SDAP layer and a PDCP layer that are respectively peering to those of a terminal;
the user plane protocol layer further includes an adaptation layer, an RLC layer, a MAC layer, and a PHY layer that are respectively peering to those of a relay;
in downlink transmission, the SDAP layer is configured to perform at least one of the following operations:
   adding an identifier of a quality of service flow to which a downlink data packet belongs; and
   mapping the downlink data packet to a DRB on an interface between the terminal and the relay; and
   in downlink transmission, the adaptation layer is configured to perform at least one of the following operations:
      adding an identifier of a terminal to which the downlink data packet belongs; and
      adding indication information, where the indication information is used to indicate a mapping relationship between the downlink data packet and the DRB on the interface between the terminal and the relay.

Based on the fifteenth aspect, in a first possible design of the fifteenth aspect, in downlink transmission, the adaptation layer is further configured to perform at least one of the following operations:
mapping the downlink data packet to a DRB on an interface between the relay and the base station for transmission; and
aggregating downlink data packets that are of the terminal and another terminal and that have same quality of service, and mapping the aggregated downlink data packets to a same DRB on the interface between the relay and the base station for transmission.

Based on the fifteenth aspect or the first possible design of the fifteenth aspect, in a second possible design of the fifteenth aspect, in uplink transmission,
the SDAP layer is configured to:
identify, based on a quality of service flow identifier carried on the SDAP layer, a quality of service flow to which an uplink data packet belongs; and
the adaptation layer is configured to perform at least one of the following operations:
   identifying, based on a terminal identifier carried on the adaptation layer, a terminal to which the uplink data packet belongs; and
   identifying, based on indication information carried on the adaptation layer, that the adaptation layer carries the uplink data packet, learning of a mapping relationship between the uplink data packet and the DRB on the interface between the relay and the terminal, and delivering the uplink data packet to the PDCP layer corresponding to the DRB for processing.

The solutions in the fifteenth aspect and the various possible designs have same beneficial effects as the solutions in the eleventh aspect and the various possible designs do.

A sixteenth aspect of the embodiments of this application provides a communication processing method. The method includes:
in downlink transmission, obtaining, by the base station, a downlink data packet of the terminal; and after processing the downlink data packet separately on the SDAP layer, the PDCP layer, and the adaptation layer, carrying, by the base station, the processed downlink data packet on the DRB between the base station and the relay, and sending the processed downlink data packet to the relay, where
the processing performed by the base station on the downlink data packet on the SDAP layer includes at least one of the following operations:
   adding an identifier of a quality of service flow to which the downlink data packet belongs; and
   mapping the downlink data packet to the DRB on the interface between the terminal and the relay; and
   the processing performed by the base station on the downlink data packet on the adaptation layer includes at least one of the following operations:
      adding an identifier of a terminal to which the downlink data packet belongs; and
      adding indication information, where the indication information is used to indicate a mapping relationship between the downlink data packet and the DRB on the interface between the terminal and the relay.

Based on the sixteenth aspect, in a first possible design of the sixteenth aspect,
in downlink transmission, the base station further performs at least one of the following operations on the adaptation layer:
mapping the downlink data packet to the DRB on the interface between the relay and the base station for transmission; and
aggregating downlink data packets that are of the terminal and another terminal and that have same quality of service, and mapping the aggregated downlink data packets to a same DRB on the interface between the relay and the base station for transmission.

Based on the sixteenth aspect or the first possible design of the sixteenth aspect, in a second possible design of the sixteenth aspect,
in uplink transmission, the processing performed by the base station on the uplink data packet on the SDAP layer includes at least the following operation:
identifying, based on a quality of service flow identifier carried on the SDAP layer, a quality of service flow to which the uplink data packet belongs; and
in uplink transmission, the processing performed by the base station on the uplink data packet on the adaptation layer includes at least one of the following operations:
   identifying, based on a terminal identifier carried on the adaptation layer, a terminal to which the uplink data packet belongs; and
   identifying, based on indication information carried on the adaptation layer, that the adaptation layer carries the uplink data packet, learning of a mapping relationship between the uplink data packet and the DRB on the interface between the relay and the terminal, and delivering the uplink data packet to the PDCP layer corresponding to the DRB for processing.

The solutions in the sixteenth aspect and the various possible designs have same beneficial effects as the solutions in the twelfth aspect and the various possible designs do.

A seventeenth aspect provides a computer product. The computer product includes a processor and a memory. The memory includes code. The code is used to implement the method according to the second aspect and any possible design of the second aspect, the fourth aspect and any possible design of the fourth aspect, the sixth aspect, the eighth aspect and any possible design of the eighth aspect, the tenth aspect, the twelfth aspect and any possible design of the twelfth aspect, the fourteenth aspect, and the sixteenth aspect and any possible design of the sixteenth aspect. Optionally, the computer product may be the base station or the relay to which the foregoing implementations are applied. The computer product may alternatively be a chip for implementing the foregoing implementations. A processor and a memory that are included in the chip each include at least one gate circuit. Each gate circuit includes at least one transistor (for example, a field effect transistor) connected via a wire. Each transistor is made from a semiconductor material. The technical solution provided in the seventeenth aspect has a technical effect of the foregoing corresponding implementation. For details, refer to the foregoing implementation.

An eighteenth aspect provides a communications system. The system includes the relay provided in the first aspect and any possible design of the first aspect and the base station provided in the fifth aspect and any possible design of the fifth aspect. The technical solution provided in the eighteenth aspect has a technical effect of the foregoing corresponding implementation. For details, refer to the foregoing implementation.

A nineteenth aspect provides a communications system. The system includes the relay provided in the third aspect and any possible design of the third aspect and the base station provided in the seventh aspect and any possible design of the seventh aspect. The technical solution provided in the nineteenth aspect has a technical effect of the foregoing corresponding implementation. For details, refer to the foregoing implementation.

A twentieth aspect provides a communications system. The system includes the relay provided in the ninth aspect and the base station provided in the thirteenth aspect and any possible design of the thirteenth aspect. The technical solution provided in the twentieth aspect has a technical effect of the foregoing corresponding implementation. For details, refer to the foregoing implementation.

A twenty-first aspect provides a communications system. The system includes the relay provided in the eleventh aspect and any possible design of the eleventh aspect and the base station provided in the fifteenth aspect and any possible design of the fifteenth aspect. The technical solution provided in the twenty-first aspect has a technical effect of the foregoing corresponding implementation. For details, refer to the foregoing implementation.

A twenty- second aspect provides a computer storage medium. The computer storage medium includes program code. The program code is used to implement the method according to the second aspect and any possible design of the second aspect, the fourth aspect and any possible design of the fourth aspect, the sixth aspect, the eighth aspect and any possible design of the eighth aspect, the tenth aspect, the twelfth aspect and any possible design of the twelfth aspect, the fourteenth aspect, and the sixteenth aspect and any possible design of the sixteenth aspect. The technical solution provided in the twenty-second aspect has a technical effect of the foregoing corresponding implementation. For details, refer to the foregoing implementation.

### BRIEF DESCRIPTION OF DRAWINGS

FIG. 1 is a schematic architectural diagram of a wireless communications system according to an embodiment of this application;
FIG. 2 is a schematic diagram of a control plane protocol stack architecture of a relay according to an embodiment of this application;
FIG. 3A is a schematic diagram of a user plane protocol stack architecture of a wireless communications system according to an embodiment of this application;
FIG. 3B is a schematic flowchart of a communication processing method for downlink data in the user plane protocol stack architecture in FIG. 3A according to an embodiment of this application;
FIG. 3C is a schematic flowchart of a communication processing method for uplink data in the user plane protocol stack architecture in FIG. 3A according to an embodiment of this application;
FIG. 4 is a schematic diagram of a control plane protocol stack architecture of a wireless communications system according to an embodiment of this application;
FIG. 5A is a schematic diagram of a user plane protocol stack architecture of a wireless communications system according to an embodiment of this application;
FIG. 5B is a schematic flowchart of a communication processing method for downlink data in the user plane protocol stack architecture in FIG. 5A according to an embodiment of this application;
FIG. 5C is a schematic flowchart of a communication processing method for uplink data in the user plane protocol stack architecture in FIG. 5A according to an embodiment of this application;
FIG. 6 is a schematic diagram of a control plane protocol stack architecture of a wireless communications system according to an embodiment of this application;
FIG. 7A is a schematic diagram of a user plane protocol stack architecture of a wireless communications system according to an embodiment of this application;
FIG. 7B is a schematic flowchart of a communication processing method for downlink data in the user plane protocol stack architecture in FIG. 7A according to an embodiment of this application;
FIG. 7C is a schematic flowchart of a communication processing method for uplink data in the user plane protocol stack architecture in FIG. 7A according to an embodiment of this application;
FIG. 8 is a schematic diagram of a control plane protocol stack architecture of a wireless communications system according to an embodiment of this application;
FIG. 9 is a schematic diagram of a user plane protocol stack architecture of a wireless communications system according to an embodiment of this application;
FIG. 10A and FIG. 10B are a schematic system interaction diagram showing that in a wireless communications system, a terminal accesses a network to establish a bearer according to an embodiment of this application;
FIG. 11A and FIG. 11B are another schematic system interaction diagram showing that in a wireless communications system, a terminal accesses a network to establish a bearer according to an embodiment of this application;
FIG. 12 is still another schematic system interaction diagram showing that in a wireless communications system, a terminal accesses a network to establish a bearer according to an embodiment of this application; and
FIG. 13 is a schematic diagram of a general structure of a communications apparatus according to an embodiment of this application.

### DESCRIPTION OF EMBODIMENTS

In a schematic architectural diagram of a wireless communications system shown in FIG. 1, the wireless communications system includes a terminal, a relay, a base station, and a core network device. The terminal may transmit data with the relay via a licensed spectrum or an unlicensed spectrum. The relay forwards or amplifies the data of the terminal, and sends the data to the terminal or the base station. The base station and the core network device transmit various types of data through a tunnel connection. In a specific communication process, the terminal, the relay, the base station, and the core network device complete the communication process on protocol layers included in a control plane protocol layer and a user plane protocol layer. The control plane protocol layer is mainly configured to transmit control signaling. The user plane protocol layer is mainly configured to transmit service data (for example, voice or a multimedia movie).

The relay is a network side device operated by an operator. An interface between the relay and the terminal is referred to as an air interface (or a uu interface). An interface between the relay and the base station is referred to as a relay interface (or a un interface). Alternatively, the relay may be another terminal that has accessed the base station. The another terminal has a function of forwarding or amplifying a signal sent by the terminal or a network to the another terminal. In this case, an interface between the terminal and the relay is a device-to-device (device to device, D2D) interface, the terminal is also referred to as a remote (remote) terminal, and the another terminal is also referred to as a relay (relay) terminal. In the embodiments of this application, specific names of the foregoing interfaces are not limited. However, for ease of description, details are not described. An interface between the relay and the terminal is referred to as a first interface, an interface between the relay and the base station is referred to as a second interface, and an interface between the base station and the core network device is referred to as a third interface. A DRB on the first interface is referred to as a uu DRB, and a DRB on the second interface is referred to as a un DRB.

In the embodiments of this application, the terminal is also referred to as user equipment (user equipment, UE) or a mobile station (mobile station), and includes a mobile phone, a handheld internet of things device, a wearable device (wearable devices), or the like.

In the embodiments of this application, the base station may be classified into a macro base station (macro base station) and a small base station. The small base station is further classified into a micro base station (micro base station), a pico base station (pico base station), and the like. Optionally, in the fifth generation wireless communications system, the base station may be replaced with a control unit (control unit, CU) and at least one distributed unit (distributed unit, DU) in hardware implementation. Optionally, the control unit includes a packet data convergence protocol (Packet Data Convergence Protocol, PDCP) layer and a protocol layer above the PDCP layer, for example, a radio resource control (radio resource control, RRC) layer. Each distributed unit includes a radio link control (radio link control, RLC) layer, a media access control (media access control, MAC) layer, and a physical (physical, PHY) layer.

In the embodiments of this application, the core network device may be divided into a core network control plane device and a core network user plane device. The core network control plane device is configured to transmit non-access stratum (non-access stratum, NAS) control signaling of a terminal, and the core network user plane device is configured to transmit service data of the terminal.

One aspect of the embodiments of this application provides a protocol stack architecture of a wireless communications system and a communication processing method in the protocol stack architecture, and the following content is included.

FIG. 2 is a schematic diagram of a control plane protocol stack of the wireless communications system shown in FIG. 1. In FIG. 2, a terminal and a relay each include a peer (peer to peer) RRC layer, a peer PDCP layer, a peer RLC layer, a peer MAC layer, and a peer PHY layer on a first interface. The relay and a base station each include a peer NGAP (new generation application protocol) layer, a peer stream control transmission protocol (stream control transmission protocol, SCTP) layer, a peer internet protocol (internet protocol, IP) layer, a peer PDCP layer, a peer RLC layer, a peer MAC layer, and a peer PHY layer on a second interface. The base station and a core network control plane device each include a peer NGAP protocol layer, a peer SCTP layer, a peer IP layer, a peer L2 layer, and a peer L1 layer on a third interface. The terminal and the core network control plane device each include a peer NAS layer. The L1 layer is a physical layer, and the L2 layer is a data link layer. For example, the L1 layer is an open system interconnection reference model-defined (open system interconnection reference model, OSI) physical layer, and the L2 layer is an OSI-defined data link layer (data link layer, DLL).

On the control plane protocol stack shown in FIG. 2, because there is a peer RRC layer on the first interface, the terminal and the relay can parse an RRC message (including an RRC message sent to the terminal or an RRC message generated by the terminal) of the terminal. For uplink transmission, the terminal sends a generated uplink RRC message to the relay through the first interface. The relay generates an uplink NGAP message on an NGAP layer on the second interface based on the received uplink RRC message, processes the generated uplink NGAP message on the SCTP layer and the IP layer, carries the processed uplink NGAP message on a DRB on the second interface, and sends the uplink NGAP message to the base station, for example, a donor base station (donor base station). The base station forwards the uplink NGAP message to the core network control plane device on the peer NGAP layer on the third interface. For downlink transmission, the core network control plane device sends a downlink NGAP message to the base station on the peer NGAP layer on the third interface. The base station sends the downlink NGAP message to the relay through the second interface, where the downlink NGAP message is processed on the SCTP layer and the IP layer, and the processed downlink NGAP message is sent by being carried on the DRB on the second interface. The relay generates a downlink RRC message based on the received downlink NGAP message, and sends the generated downlink RRC message to the terminal on the peer RRC layer on the first interface. It should be noted that, for example, as shown by the dash-dot line in FIG. 2, any protocol layer message is transmitted in physical space after layers of processing.

FIG. 3A is a schematic diagram of a user plane protocol stack corresponding to the control plane protocol stack shown in FIG. 2. In FIG. 3A, a terminal and a relay each include a peer service data adaptation protocol (service data adaptation protocol, SDAP) layer, a peer PDCP layer, a peer RLC layer, a peer MAC layer, and a peer PHY layer on a first interface. The relay and a base station each include a peer general packet radio service tunneling protocol (general packet radio service tunneling protocol, GTP) layer, a peer user datagram protocol (user datagram protocol, UDP) layer, a peer IP layer, a peer PDCP layer, a peer RLC layer, a peer MAC layer, and a peer PHY layer on a second interface. The base station and a core network user plane device each include a peer GTP layer, a peer UDP layer, a peer IP layer, a peer L2 layer, and a peer L1 layer on a third interface. A peer IP layer is established for each of the terminal and the core network user plane device. The L1 layer is a physical layer, and the L2 layer is a data link layer. For example, the L1 layer is an OSI-defined physical layer, and the L2 layer is an OSI-defined data link layer.

In FIG. 3A, the terminal and the relay establish different DRBs on the first interface for different services of the terminal. Different terminals served by the relay establish different DRBs with the relay on the first interface. The base station and the relay also establish different DRBs on the second interface for different services.

After a terminal accesses a wireless communications system, on the first interface, different DRBs may be established for the terminal, each DRB is configured to carry at least one QoS flow, and each QoS flow may provide one type of QoS guarantee. Different QoS flows may be distinguished from each other via different QoS flow identifiers (QoS flow ID). One DRB is one group of configurations of the peer PDCP layer, the peer RLC layer, the peer MAC layer, and the peer PHY layer that are included in the user plane protocol stack. Different groups of configurations correspond to different DRBs. Different GTP tunnels may be established on the second interface and the third interface for different sessions (session) of the terminal. Each GTP tunnel may be configured to transmit a plurality of quality of service (quality of service, QoS) flows. When different terminals access a wireless communications system, the relay may aggregate, on the second interface, data packets that are of different terminals and that correspond to a same QoS flow, and then carries the data packets onto a corresponding DRB for transmission. It should be noted that the session refers to an internet protocol (IP) channel established for the terminal to a core network data gateway, and includes a channel between the first interface, the second interface, and the third interface. Each session may include a plurality of QoS flows.

For example, a terminal A has a QoS flow 1 that belongs to a session A, and a terminal B has a QoS flow 2 and a QoS flow 3 that belong to a session B. The QoS flow 1 and the QoS flow 2 provide same QoS, and have a same QoS flow ID. The QoS flow 3 and the QoS flow 2 provide different QoS, and have different QoS flow IDs. The terminal A and the relay establish a DRB 1 for the QoS flow 1 on the first interface. The terminal B and the relay establish a DRB 1 for the QoS flow 2 on the first interface, and establish a DRB 2 for the QoS flow 3. On the second interface, the relay and the base station establish a GTP tunnel A for the session A of the terminal A, and establish a GTP tunnel B for the session B of the terminal B. The GTP tunnel A is configured to transmit the QoS flow 1 of the terminal A, and the GTP tunnel B is configured to transmit the QoS flow 2 and the QoS flow 3 of the terminal B. Because the QoS flow 1 and the QoS flow 2 provide same QoS, on the second interface, after the QoS flow 1 of the terminal A transmitted in the GTP tunnel A and the QoS flow 2 of the terminal B transmitted in the GTP tunnel B are aggregated, the QoS flow 1 and the QoS flow 2 are carried on a same DRB on the second interface for transmission, and a QoS flow 3 of the terminal B transmitted in the GTP tunnel B is carried on another DRB on the second interface for transmission. On the third interface, the base station and the core network user plane device establish a GTP tunnel C for the session A of the terminal A, and establish a GTP tunnel D for the session B of the terminal B. The GTP tunnel C is configured to transmit the QoS flow 1 of the terminal A, and the GTP tunnel D is configured to transmit the QoS flow 2 and the QoS flow 3 of the terminal B.

In FIG. 3A, on the second interface and the third interface, different sessions of the terminal correspond to different GTP tunnels. At least one QoS flow may be transmitted in one GTP tunnel, and the at least one QoS flow transmitted in the GTP tunnel is identified via a QoS flow ID that corresponds to the at least one QoS flow and that is carried in a header field of the GTP tunnel.

Downlink data transmission is used as an example for description. As shown in a schematic flowchart of a communication processing method in FIG. 3B, the following content is included.

301. On a third interface, a core network user plane device sends a downlink data packet of a terminal to a base station through a GTP tunnel that is of a peer GTP layer on the third interface and that corresponds to a session to which the downlink data packet belongs. A header field of the GTP tunnel carries an identifier (QoS flow ID) of a QoS flow to which the downlink data packet belongs.

Downlink data packets of different terminals belong to different sessions, and the different sessions of the different terminals correspond to different GTP tunnels on the third interface. On the third interface, different sessions of each terminal have a one-to-one correspondence with one GTP tunnel on the third interface. One session includes data, belonging to different QoS flows, of one terminal, and the QoS flows have different QoS flow ID data.

302. The base station may learn of the session corresponding to the GTP tunnel according to the GTP tunnel on the third interface, and map the downlink data packet of the terminal obtained from the GTP tunnel to a GTP tunnel corresponding to the session of the terminal on the second interface. Further, the base station further identifies, based on the QoS flow ID carried in the header field of the GTP tunnel on the third interface, the QoS flow transmitted in the GTP tunnel.

303. The base station maps the downlink data packet corresponding to the QoS flow to a DRB on the second interface, and sends the downlink data packet to a relay.

The relay and the base station may establish a plurality of DRBs on the second interface. A specific DRB, to which the downlink data packet of the terminal is mapped, on the second interface is determined by the base station.

Optionally, if the base station receives a plurality of downlink data packets from terminals, the base station aggregates downlink data packets with same QoS, for example, aggregates downlink data packets with a same QoS flow ID, carries the aggregated downlink data packets onto a corresponding DRB on the second interface, and sends the downlink data packets to the relay.

304. The relay receives the downlink data packet from the corresponding DRB on the second interface, and delivers the downlink data packet to a GTP layer on second interface for processing. The relay may learn, via the QoS flow identifier carried in the header field of the GTP tunnel on the GTP layer on the second interface, of the QoS flow to which the downlink data packet belongs, map the downlink data packet corresponding to the QoS flow to a DRB on a first interface, and send the downlink data packet to the terminal.

Optionally, on the second interface, if the base station aggregates the downlink data packets with same QoS, then carries the downlink data packets onto the DRB, and sends the downlink data packets to the relay, the relay receives the aggregation packet from the DRB on the second interface, recovers the downlink data packet belonging to the terminal from the aggregation packet, and sends the downlink data packet to a GTP layer corresponding to the session determined in 302 for processing.

The terminal and the relay may establish a plurality of DRBs on the first interface. A specific DRB, to which the downlink data packet of the terminal is mapped, on the first interface is determined by the relay.

Uplink data transmission is used as an example for description. As shown in a schematic flowchart of a communication processing method in FIG. 3C, the following content is included.

305. On a first interface, after a terminal filters an uplink data packet via an uplink data packet template, for example, a QoS traffic flow template (traffic flow template, tft), the terminal maps the uplink data packet to a DRB, on the first interface, corresponding to a QoS flow, and sends the uplink data packet to a relay.

In a possible implementation, the relay sends, to the terminal via dedicated signaling (for example, RRC signaling), a mapping relationship between an identifier of the QoS flow to which the uplink data packet belongs and the DRB on the first interface. When an uplink data packet of the terminal needs to be transmitted, the terminal maps, based on the mapping relationship, the uplink data packet to the corresponding DRB on the first interface, and sends the uplink data packet to the terminal.

In another possible implementation, the terminal receives a downlink data packet from a DRB on the first interface. In this case, the terminal maps, to the DRB, an uplink data packet that belongs to a same QoS flow as the downlink data packet does, and sends the uplink data packet to the relay. For example, if the relay sends a downlink data packet A to the terminal on a DRB-A on the first interface, when the terminal needs to send an uplink data packet that belongs to a same QoS flow as the downlink data packet A does, the terminal sends the uplink data packet to the relay on the DRB-A on the first interface. In this case, a manner of determining uplink transmission based on downlink transmission is referred to as a reflexive mapping (reflexive mapping) manner.

It should be noted that regardless of whether bearer mapping is performed in the reflective mapping manner during uplink data transmission, when sending a downlink data packet to the relay, the base station may add, to a header field of a GTP tunnel of the second interface, an identifier of a QoS flow corresponding to the downlink data packet, so that the relay determines, based on the QoS flow identifier, a DRB corresponding to the downlink data packet on the first interface. Optionally, the base station further sends indication information to the relay, to indicate whether the QoS flow identifier carried in the header field of the GTP tunnel is used for the reflexive mapping manner. If the QoS flow identifier carried in the header field of the GTP tunnel is used for the reflexive mapping manner, when a DRB on the second interface receives a downlink data packet, the relay sends, to the terminal when sending the downlink data packet, a QoS flow ID of a QoS flow to which the downlink data packet belongs, so that when the relay receives the downlink data packet on a DRB on the second interface, the relay uses the reflexive mapping manner in uplink transmission. In other words, an uplink data packet that belongs to the same QoS flow as the downlink data packet does is carried on the same DRB and is sent to the base station.

306. After receiving the uplink data packet from the first interface, the relay identifies, based on a QoS flow identifier carried on an SDAP layer on which the uplink data packet is located, a session to which the uplink data packet belongs and the QoS flow to which the uplink data packet belongs, and maps the uplink data packet to a GTP tunnel corresponding to the session of the terminal on the second interface.

307. The relay maps the uplink data packet of the terminal to the DRB on the second interface, and sends the uplink data packet to the base station.

Optionally, if the relay receives a plurality of uplink data packets sent by terminals, after aggregating uplink data packets of different the terminals with same QoS, the relay carries the aggregated uplink data packets onto a corresponding DRB on the second interface, and sends the aggregated uplink data packets to the base station.

Optionally, the base station may send, to the relay via dedicated signaling (for example, RRC signaling), a mapping relationship between a QoS flow ID of a QoS flow to which the uplink data packet belongs and the DRB on the second interface. When the relay needs to transmit an uplink data packet of the terminal, the relay maps the uplink data packet to the corresponding DRB based on the mapping relationship, and sends the uplink data packet to the base station.

Optionally, on the second interface, the relay may alternatively use a reflexive mapping manner to use a mapping relationship between a QoS flow and a DRB on the second interface in downlink transmission of the base station as a mapping relationship between a QoS flow and a DRB on the second interface in uplink transmission of the relay.

Optionally, the relay may further attach, based on an obtained mapping relationship between a QoS flow ID and a differentiated services code point (differentiated services code point, DSCP), a corresponding DSCP label to an uplink data packet corresponding to the QoS flow ID, and perform uplink data packet template filtering, to map the uplink data packet to the corresponding DRB on the second interface. The mapping relationship between the QoS flow ID and the DSCP may be sent by a network management system of the relay to the relay.

308. The base station receives the uplink data packet from the corresponding DRB on the second interface, and maps, based on a GTP tunnel that corresponds to the session of the terminal and that carries the uplink data packet on the second interface, the uplink data packet to a GTP tunnel, corresponding to the session of the terminal, on the third interface, and sends the uplink data packet to a core network user plane device.

According to the implementations described in FIG. 2 and FIG. 3A to FIG. 3C, the control plane protocol stack and the user plane protocol stack of the wireless communications system in the embodiments of this application may be compatible with an LTE system architecture. Therefore, network upgrade costs can be reduced.

Another aspect of the embodiments of this application provides a protocol stack architecture of a wireless communications system and a communication processing method in the protocol stack architecture. The following content is included.

FIG. 4 is a schematic diagram of a control plane protocol stack of the wireless communications system shown in FIG. 1. In FIG. 4, a terminal and a relay each include a peer RRC layer, a peer PDCP layer, a peer RLC layer, a peer MAC layer, and a peer PHY layer on a first interface. The relay and a base station each include a peer NGAP layer, a peer RRC layer, a peer PDCP layer, a peer RLC layer, a peer MAC layer, and a peer PHY layer on a second interface. The base station and a core network control plane device each include a peer NGAP layer, a peer SCTP layer, a peer IP layer, a peer L2 layer, and a peer L1 layer on a third interface. The terminal and the core network control plane device each include a peer NAS layer.

In FIG. 4, in uplink transmission, the relay generates an uplink NGAP message on the peer NGAP layer on the second interface based on an uplink RRC message sent by the terminal, carries the uplink NGAP message on the peer RRC layer on the second interface, and sends the uplink NGAP message to the base station via a signaling radio bearer (signaling radio bearer, SRB) on the second interface. The base station generates an uplink NGAP message on the third interface based on the uplink RRC message received on the second interface, and sends the uplink NGAP message to the core network control plane device. One SRB is one group of configurations of the peer RRC layer, the peer PDCP layer, the peer RLC layer, the peer MAC layer, and the peer PHY layer that are included in the control plane protocol stack. Different configurations correspond to different SRBs.

In FIG. 4, in downlink transmission, the core network control plane device sends a downlink NGAP message to the base station through the third interface. The base station generates a downlink NGAP message on the second interface based on the received downlink NGAP message, carries the generated downlink NGAP message on the peer RRC layer on the second interface, and sends the generated downlink NGAP message to the relay via an SRB on the second interface. The relay generates a downlink RRC message on the peer RRC layer on the first interface based on the received downlink NGAP message, and sends the generated downlink RRC message to the terminal via an SRB on the first interface

Optionally, two RRC messages ULInformationTransfer and DLInformationTransfer in an LTE system may be used between the relay and the base station to respectively carry an uplink NGAP message and a downlink NGAP message. For a specific message structure, refer to the LTE system. For example, indication information is added to each of the foregoing two RRC messages, to indicate that the RRC message carries an NGAP message. In this way, a receiver (the relay or the base station) of the RRC message knows, based on the indication information, that the NGAP message carried in the RRC message further needs to be sent to the NGAP layer for processing.

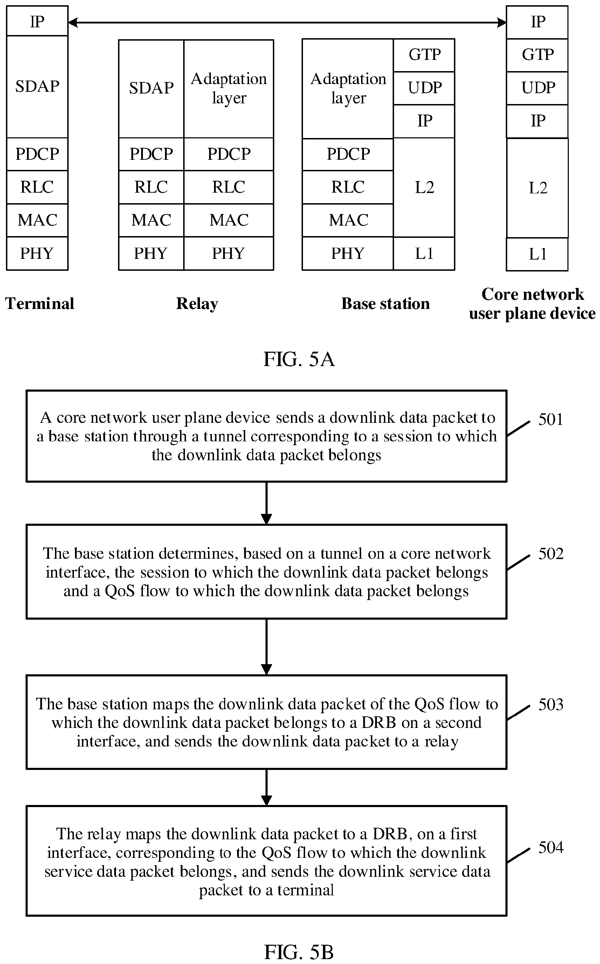

FIG. 5A shows a user plane protocol stack corresponding to the control plane protocol stack shown in FIG. 4. In FIG. 5A, a terminal and a relay each include a peer SDAP layer, a peer PDCP layer, a peer RLC layer, a peer MAC layer, and a peer PHY layer on a first interface. The relay and a base station each include a peer adaptation layer, a peer PDCP layer, a peer RLC layer, a peer MAC layer, and a peer PHY layer on a second interface. The base station and a core network user plane device each include a peer GTP layer, a peer UDP layer, a peer IP layer, a peer L2 layer, and a peer L1 layer on a third interface. The terminal and the core network user plane device each include a peer IP layer. It should be noted that in the embodiments of this application, the adaptation layer is merely a name, and the name imposes no limitation on the adaptation layer.

The adaptation layer of the relay on the second interface includes at least one of the following operations:
1. Add an identifier of a terminal to which an uplink data packet belongs, for example, an identifier of the terminal on an NGAP layer; and correspondingly, in downlink transmission, identify, based on a terminal identifier carried on the adaptation layer, a terminal to which a downlink data packet belongs.
2. Add at least one of an identifier of a quality of service flow (QoS flow ID) to which the uplink data packet belongs and an identifier of a session (session ID) to which the uplink data packet belongs; and correspondingly, in downlink transmission, identify, based on a QoS flow ID carried on the adaptation layer, a QoS flow to which the downlink data packet belongs, and identify, based on a session identifier carried on the adaptation layer, a session to which the downlink data packet belongs.
3. Map an uplink data packet transmitted on a DRB on the first interface to a DRB on the second interface for transmission.
4. Aggregate uplink data packets that are of the terminal and another terminal and that correspond to a same QoS flow, and map the aggregated uplink data packets to a same DRB on the second interface for transmission; and correspondingly, in downlink transmission, recover, from an aggregation packet transmitted on the DRB on the second interface, the downlink data packet of the terminal.

The adaptation layer of the base station on the second interface includes at least one of the following functions:
1. Add an identifier of a terminal to which a downlink data packet belongs; for example, an identifier of the terminal on an NGAP layer; and correspondingly, in uplink transmission, identify, based on a terminal identifier carried on the adaptation layer, a terminal to which an uplink data packet belongs.
2. Add at least one of an identifier of a quality of service flow (QoS flow ID) to which the downlink data packet belongs and an identifier of a session (PDU session ID) to which the downlink data packet belongs; and correspondingly, in uplink transmission, identify, based on a QoS flow ID carried on the adaptation layer, a QoS flow to which the uplink data packet belongs, and identify, based on a session identifier carried on the adaptation layer, a session to which the uplink data packet belongs.
3. Map the downlink data packet of the terminal to a DRB on the second interface for transmission.
4. Aggregate downlink data packets that are of the terminal and another terminal and that correspond to a same QoS flow, and map the aggregated downlink data packets to a same DRB on the interface between the relay and the base station for transmission.

In FIG. 5A, in a service bearer establishment process of the terminal, different DRBs are established for different services of the terminal on the first interface between the terminal and the relay.

FIG. 5A, in a service bearer establishment process of the terminal, different DRBs are established for different services of the terminal on the first interface between the terminal and the relay. In other words, a QoS flow corresponding to one QoS flow ID is mapped to one DRB. Different GTP tunnels are established for different sessions of the terminal on the third interface between the base station and the core network user plane device. For a same terminal, one session includes a plurality of QoS flows, different QoS flows correspond to different QoS flow IDs, and the QoS flow IDs are all transmitted by being carried in a GTP tunnel corresponding to the session. A receiver may identify, based on a QoS flow ID carried in a header field of the GTP tunnel, a QoS flow transmitted in the GTP tunnel. Compared with FIG. 3A, in FIG. 5A, there is no GTP layer on the second interface. Therefore, there is no GTP tunnel, established for the session of the terminal, on the second interface either.

Downlink data transmission is used as an example. As shown in a schematic flowchart of a communication processing method in FIG. 5B, the following content is included.

501. On a third interface, a core network user plane device sends a downlink data packet of a terminal to a base station through a GTP tunnel corresponding to a session to which the downlink data packet belongs. A header field of the GTP tunnel carries a QoS flow ID corresponding to the downlink data packet.

Different terminals have different sessions, and the different sessions of the different terminals correspond to different GTP tunnels on the third interface. On the third interface, each session of a same terminal has a one-to-one correspondence with one GTP tunnel. Each session may include a plurality of QoS flows, and different QoS flows correspond to different QoS flow IDs. On the third interface, a plurality of QoS flows included in a same session of the terminal are all carried in a same GTP tunnel.

502. A base station identifies, based on the GTP tunnel, in which the downlink data packet is transmitted, on the third interface, the session of the terminal corresponding to the downlink data packet, and identifies, based on the QoS flow ID carried in the header field of the GTP tunnel, a QoS flow to which the downlink data packet belongs.

On the third interface, the base station and the core network user plane device establish different GTP tunnels for different sessions of different terminals. Therefore, the terminal corresponding to the downlink data packet and the session corresponding to the terminal can be identified based on the GTP tunnel carrying the downlink data packet on the third interface.

503. After processing the downlink data packet corresponding to the QoS flow ID on the adaptation layer, the base station maps the processed downlink data packet to a DRB on a second interface, and sends the processed downlink data packet to a relay.

The relay and the base station may establish a plurality of DRBs on the second interface. A specific DRB, to which the downlink data packet of the terminal is mapped, on the second interface is determined by the base station.

Optionally, if the base station receives a plurality of downlink data packets from terminals, the base station aggregates downlink data packets with same QoS, for example, aggregates downlink data packets with a same QoS flow ID, carries the aggregated downlink data packets on a corresponding DRB on the second interface, and sends the downlink data packets to the relay.

504. The relay receives the downlink data packet from the corresponding DRB on the second interface, and delivers the downlink data packet to an adaptation layer on the second interface for processing. The relay may learn, based on a terminal identifier carried on the adaptation layer, of a terminal to which the downlink data packet belongs, learn, based on a QoS flow ID carried on the adaptation layer, of a QoS flow to which the downlink data packet belongs, map the downlink data packet corresponding to the QoS flow ID to a DRB on a first interface, and send the downlink data packet to the terminal.

Optionally, on the second interface, if the base station aggregates the downlink data packets with same QoS, then carries the downlink data packets on the DRB, and sends the downlink data packets to the relay, the relay receives the aggregation packet from the DRB on the second interface, recovers the downlink data packet belonging to the terminal from the aggregation packet, and sends the downlink data packet to an adaptation layer for processing.

The terminal and the relay may establish a plurality of DRBs on the first interface. A specific DRB, to which the downlink data packet of the terminal is mapped, on the first interface is determined by the relay.

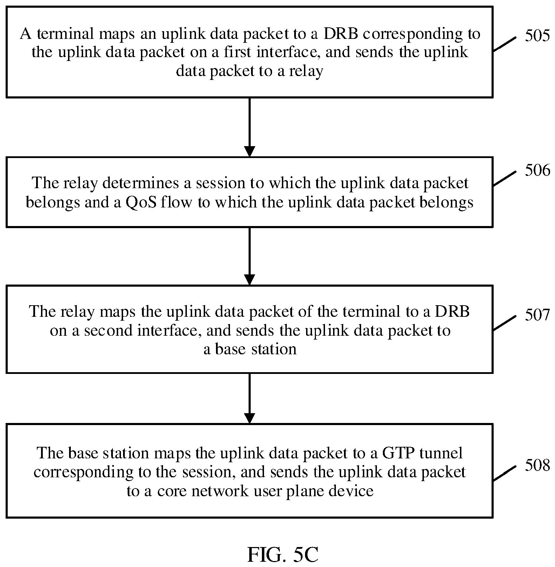

Uplink data transmission is used as an example. As shown in a schematic flowchart of a communication processing method in FIG. 5C, the following content is included.

505. On a first interface, after a terminal filters an uplink data packet via an uplink data packet template, the terminal maps the uplink data packet to a corresponding DRB, and sends the uplink data packet to a relay.

In a possible implementation, the relay may send, to the terminal via dedicated signaling (for example, RRC signaling), a mapping relationship between an ID of a QoS flow to which the uplink data packet belongs and a DRB on the first interface. When an uplink data packet of the terminal needs to be transmitted, the terminal maps, based on the mapping relationship, the uplink data packet to the corresponding DRB, and sends the uplink data packet to the terminal.

In another possible implementation, the terminal may use a reflexive manner, and receive a downlink data packet from a DRB on the first interface. In this case, the terminal maps, to the DRB, a corresponding uplink data packet that has same QoS as the downlink data packet does, and sends the uplink data packet to the relay. For example, if the relay sends a downlink data packet A to the terminal on a DRB -A on the first interface, when the terminal needs to send an uplink data packet that has same QoS as the downlink data packet A does, the terminal sends the uplink data packet to the relay on the DRB-A on the first interface.

It should be noted that regardless of whether bearer mapping is performed in the reflective mapping manner during uplink data transmission, when sending a downlink data packet to the relay, a base station may add, to an adaptation layer, a QoS flow ID corresponding to the downlink data packet, so that the relay determines, based on the QoS flow identifier, a DRB corresponding to the downlink data packet on the first interface. Optionally, the base station further sends indication information to the relay, to indicate whether the QoS flow identifier carried on the adaptation layer is used for the reflexive mapping manner. If the QoS flow identifier carried on the adaptation layer is used for the reflexive mapping manner, the relay sends, to the terminal when sending a downlink data packet, an ID of a QoS flow to which the downlink data packet belongs, so that when the relay receives the downlink data packet on a DRB on the second interface, the relay uses the reflexive mapping manner in uplink transmission. In other words, a corresponding uplink data packet is carried on the same DRB and is sent to the base station.

506. After receiving the uplink data packet from the DRB on the first interface, the relay identifies, based on an SDAP layer corresponding to a session to which the uplink data packet belongs and a QoS flow ID carried on the SDAP layer, the session to which the uplink data packet belongs and a QoS flow to which the uplink data packet belongs, and sends the uplink data packet to the adaptation layer on the second interface for processing.

Different sessions correspond to different SDAP layers. Therefore, a session corresponding to an uplink data packet may be determined based on a specific SDAP layer that receives the uplink data packet.

507. The relay maps the uplink data packet of the terminal to the DRB on the second interface, and sends the uplink data packet to the base station.

Optionally, if the relay receives a plurality of uplink data packets sent by terminals, after aggregating uplink data packets of different terminals with same QoS, the relay carries the aggregated uplink data packets on a corresponding DRB on the second interface, and sends the aggregated uplink data packets to the base station.

Optionally, the base station may send, to the relay via dedicated signaling, a mapping relationship between an ID of a QoS flow to which the uplink data packet belongs and the DRB on the second interface. When the relay needs to transmit an uplink data packet of the terminal, the relay maps the uplink data packet to the corresponding DRB based on the mapping relationship, and sends the uplink data packet to the base station.

Optionally, on the second interface, the relay may alternatively use a reflexive mapping manner to use a mapping relationship between a QoS flow of a terminal and a DRB on the second interface in downlink transmission of the base station as a mapping relationship between a QoS flow of the terminal and a DRB on the second interface in uplink transmission of the relay.

Optionally, the relay may further attach, based on an obtained mapping relationship between a QoS flow ID and a DSCP, a corresponding DSCP label to an uplink data packet corresponding to the QoS flow ID, and perform UL TFT filtering, to map the uplink data packet to the corresponding DRB on the second interface. The mapping relationship between the QoS flow ID and the DSCP may be sent by a management entity OAM of the relay to the relay, or may be sent by another management/control entity to the relay.

508. The base station receives the uplink data packet from the corresponding DRB on the second interface, and maps, based on a session identifier carried on the adaptation layer on the second interface, the uplink data packet to a GTP tunnel corresponding to the session of the terminal on the third interface, and sends the uplink data packet to the core network user plane device.

According to the implementations in FIG. 4 and FIG. 5A to FIG. 5C, in the embodiments of this application, the adaptation layer is introduced into the second interface of the control plane protocol stack and the user plane protocol stack of the wireless communications system to transmit data, and no SCTP connection and GTP tunnel need to be established for the terminal on the second interface, thereby saving resources of the GTP tunnel and the SCTP connection.

Another aspect of the embodiments of this application provides a protocol stack architecture of a wireless communications system and a corresponding communication processing method. The following content is included.

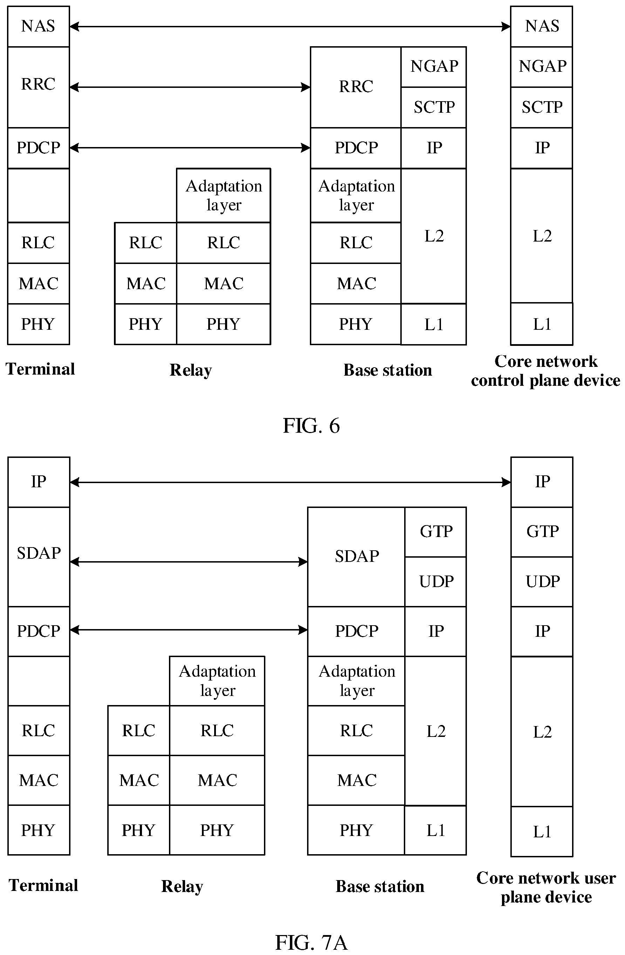

FIG. 6 is a schematic diagram of a control plane protocol stack of the wireless communications system shown in FIG. 1. In FIG. 6, a terminal and a relay each include a peer RLC layer, a peer MAC layer, and a peer PHY layer on a first interface. The relay and a base station each include a peer adaptation layer, a peer RLC layer, a peer MAC layer, and a peer PHY layer on a second interface. The base station and the terminal each include a peer PDCP layer and a peer RRC layer. The base station and a core network control plane device each include a peer NGAP layer, a peer SCTP layer, a peer IP layer, a peer L2 layer, and a peer L1 layer on a third interface. The terminal and the core network control plane device each include a peer NAS layer.

According to the control plane protocol stack shown in FIG. 6, the base station and the terminal each establish the peer RRC layer and the peer PDCP layer. The relay and the terminal each establish the peer RLC layer, the peer MAC layer, and the peer PHY layer on the first interface. The relay and the base station each establish the peer adaptation layer, the peer RLC layer, the peer MAC layer, and the peer PHY layer on the second interface.

The adaptation layer of the relay on the second interface includes at least one of the following functions:
1. Add an identifier of a terminal to which an uplink data packet belongs, for example, a cell radio network temporary identifier (cell radio network temporary identity, RNTI); and correspondingly, in downlink transmission, identify, based on a terminal identifier carried on the adaptation layer, a terminal to which a downlink data packet belongs.
2. Add indication information, where the indication information is used to indicate a mapping relationship between an uplink RRC message and an SRB on the first interface; and correspondingly, in downlink transmission, identify, based on indication information carried on the adaptation layer, that the downlink data packet is a downlink RRC message, learn of a mapping relationship between the downlink RRC message and the SRB on the first interface, and map the downlink RRC message to the corresponding SRB on the first interface for transmission.
3. Map an uplink data packet into which the uplink RRC message is encapsulated to an SRB or a DRB on the second interface, and send the uplink data packet to the base station.

The adaptation layer of the base station on the second interface includes at least one of the following functions:
1. Add an identifier of a terminal to which a downlink RRC message encapsulated into a downlink data packet belongs, for example, a cell radio network temporary identifier; and correspondingly, in uplink transmission, identify, based on a terminal identifier carried on the adaptation layer, a terminal to which an uplink RRC message encapsulated into the uplink data packet belongs.
2. Add indication information, where the indication information is used to indicate a mapping relationship between the downlink RRC message and an SRB on the first interface; and correspondingly, in uplink transmission, identify, based on indication information carried on the adaptation layer, that the uplink data packet is an uplink RRC message, learn of a mapping relationship between the uplink RRC message and the SRB on the first interface, and send the uplink RRC message to a corresponding RRC layer for processing.
3. Map a downlink data packet into which the downlink RRC message is encapsulated to an SRB or a DRB on the second interface, and send the downlink data packet to the relay.

FIG. 7A is a schematic diagram of a user plane protocol stack corresponding to the control plane protocol stack shown in FIG. 6. In FIG. 7A, a terminal and a relay each include a peer RLC layer, a peer MAC layer, and a peer PHY layer on a first interface. The relay and a base station each include a peer adaptation layer, a peer RLC layer, a peer MAC layer, and a peer PHY layer on a second interface. The base station and the terminal each include a peer SDAP layer and a peer PDCP layer. The base station and a core network control plane device each include a peer GTP layer, a peer UDP layer, a peer IP layer, a peer L2 layer, and a peer L1 layer on a third interface. The terminal and the core network control plane device each include a peer IP layer.

The SDAP layer of the terminal includes at least one of the following functions:
1. Map an uplink data packet of the terminal to a DRB on the first interface.
2. Add an ID of a QoS flow to which the uplink data packet belongs; and correspondingly, in downlink transmission, identify, based on a QoS flow ID carried on the adaptation layer, a QoS flow to which a downlink data packet belongs.

The SDAP layer of the base station includes at least one of the following functions:
1. Map a downlink data packet of the terminal to a DRB on the first interface.
2. Add an ID of a QoS flow to which the downlink data packet belongs; and correspondingly, in uplink transmission, identify, based on a QoS flow ID carried on the adaptation layer, a QoS flow to which an uplink data packet belongs.

The adaptation layer of the relay includes at least one of the following functions:
1. Add an identifier of a terminal to which an uplink data packet belongs, for example, a C-RNTI; and correspondingly, in downlink transmission, identify, based on a terminal identifier carried on the adaptation layer, a terminal to which the uplink data packet belongs.
2. Add indication information, where the indication information is used to indicate a mapping relationship between the uplink data packet and a DRB on the first interface; and correspondingly, in downlink transmission, identify, based on indication information carried on the adaptation layer, that the downlink data packet is a downlink data packet, and learn of a mapping relationship between the downlink data packet and the DRB on the first interface.
3. Map the uplink data packet of the terminal to a DRB on the second interface for transmission.
4. Aggregate uplink data packets that are of the terminal and another terminal and that have same QoS, and map the aggregated uplink data packets to a same DRB on the second interface for transmission; and correspondingly, in downlink transmission, recover, from an aggregation packet transmitted on the DRB on the second interface, the downlink data packet of the terminal.

The adaptation layer of the base station includes at least one of the following functions:
1. Add an identifier of a terminal to which a downlink data packet belongs, for example, a C-RNTI; and correspondingly, in uplink transmission, identify, based on a terminal identifier carried on the adaptation layer, a terminal to which an uplink data packet belongs.
2. Add indication information, where the indication information is used to indicate a mapping relationship between the downlink data packet and a DRB on the first interface; and correspondingly, in uplink transmission, identify, based on indication information carried on the adaptation layer, that the uplink data packet is an uplink data packet, learn of a mapping relationship between the uplink data packet and the DRB on the first interface, and send the uplink data packet to a corresponding upper-layer entity for processing.
3. Map the downlink data packet of the terminal to a DRB on the second interface for transmission.
4. Aggregate downlink data packets that are of the terminal and another terminal and that have same QoS, and map the aggregated downlink data packets to a same DRB on the second interface for transmission; and correspondingly, in uplink transmission, recover, from an aggregation packet transmitted on the DRB on the second interface, the uplink data packet of the terminal.

In FIG. 7A, in a service bearer establishment process of the terminal, different DRBs are established for different services of the terminal on the first interface. Different GTP tunnels are established for different sessions of the terminal on the third interface. For one terminal, one session includes a plurality of QoS flows, different QoS flows correspond to different QoS flow IDs, and the QoS flow IDs are all transmitted by being carried in a GTP tunnel corresponding to the session on the third interface. A receiver may identify, based on a QoS flow ID carried in a header field of the GTP tunnel, a QoS flow transmitted in the GTP tunnel. A difference between FIG. 7A and FIG. 5A lies in that, in FIG. 5A, the relay determines (specifically, on the adaptation layer on the second interface) mapping of a downlink data packet of the terminal to the DRB on the first interface, that is, maps the downlink data packet to the DRB on the first interface for transmission, while in FIG. 7A, the base station determines (specifically, on the SDAP layer on the second interface) mapping of a downlink data packet of the terminal to the DRB of the first interface, and carries a mapping relationship between the downlink data packet and the DRB on the first interface on the adaptation layer; and the relay maps, based on the mapping relationship carried on the adaptation layer, the downlink data packet to a corresponding DRB on the first interface for transmission.

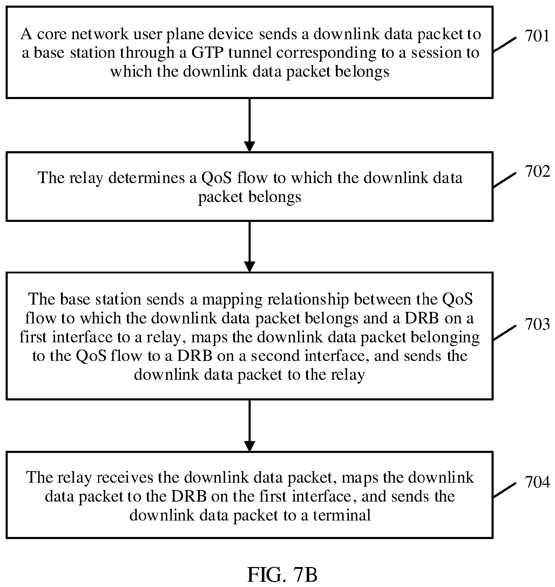

Downlink data transmission is used as an example. As shown in a schematic flowchart of a communication processing method in FIG. 7B, the following content is included.

701. On a third interface, a core network user plane device sends a downlink data packet of a terminal to a base station through a GTP tunnel corresponding to a session to which the downlink data packet belongs. A header field of the GTP tunnel carries a QoS flow ID corresponding to the downlink data packet.

Different terminals have different sessions, and the different sessions of the different terminals correspond to different GTP tunnels on the third interface. On the third interface, each session of a same terminal has a one-to-one correspondence with one GTP tunnel. Each session may include a plurality of QoS flows, and different QoS flows correspond to different QoS flow IDs. On the third interface, a plurality of QoS flows included in a same session of the terminal are all carried in a same GTP tunnel.

702. A base station identifies, based on the GTP tunnel, in which the downlink data packet is transmitted, on the third interface, the session of the terminal corresponding to the downlink data packet, and identifies, based on the QoS flow ID carried in the header field of the GTP tunnel, a QoS flow to which the downlink data packet belongs.

On the third interface, the base station and the core network user plane device establish different GTP tunnels for different sessions of different terminals. Therefore, the terminal corresponding to the downlink data packet and the session corresponding to the terminal can be identified based on the GTP tunnel carrying the downlink data packet on the third interface.

703. The base station determines a mapping relationship between the QoS flow ID and a DRB on a first interface based on the QoS flow ID, carries the mapping relationship on an adaptation layer, and sends the mapping relationship to a relay. In addition, after processing the downlink data packet corresponding to the QoS flow ID on the adaptation layer, the base station further maps the processed downlink data packet to a DRB on a second interface, and sends the processed downlink data packet to the relay.

The relay and the base station may establish a plurality of DRBs on the second interface. A specific DRB, to which the downlink data packet of the terminal is mapped, on the second interface is determined by the base station.

Optionally, if the base station receives a plurality of downlink data packets from terminals, the base station aggregates downlink data packets with same QoS, for example, aggregates downlink data packets with a same QoS flow ID, carries the aggregated downlink data packets on a corresponding DRB on the second interface, and sends the downlink data packets to the relay.

704. The relay receives the downlink data packet from the corresponding DRB on the second interface, and delivers the downlink data packet to an adaptation layer on the second interface for processing. The relay may learn, based on a terminal identifier carried on the adaptation layer, of a terminal to which the downlink data packet belongs, learn, based on indication information carried on the adaptation layer, of a mapping relationship between the downlink data packet and the DRB on the first interface, map the downlink data packet to the corresponding DRB on the first interface, and send the downlink data packet to the terminal.

Optionally, on the second interface, if the base station aggregates the downlink data packets with same QoS, then carries the downlink data packets on the DRB, and sends the downlink data packets to the relay, the relay receives the aggregation packet from the DRB on the second interface, recovers the downlink data packet belonging to the terminal from the aggregation packet, and sends the downlink data packet to the adaptation layer for processing.

The terminal and the relay may establish a plurality of DRBs on the first interface. A specific DRB, to which the downlink data packet of the terminal is mapped, on the first interface is determined by the relay.

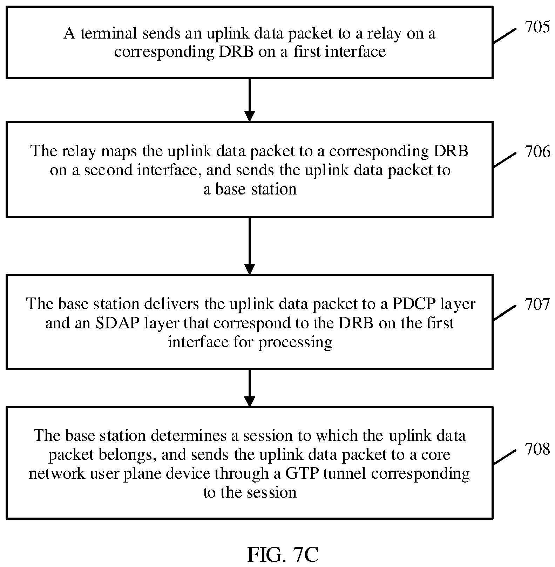

Uplink data transmission is used as an example. A possible communication processing method exists. As shown in a schematic flowchart of the communication processing method in FIG. 7C, the following content is included.

705. On a first interface, after a terminal filters an uplink data packet via an uplink data packet template, the terminal maps the uplink data packet to a corresponding DRB, and sends the uplink data packet to a relay.

In a possible implementation, the relay may send, to the terminal via dedicated signaling, a mapping relationship between an ID of a QoS flow to which the uplink data packet belongs and a DRB on the first interface. When an uplink data packet of the terminal needs to be transmitted, the terminal maps, based on the mapping relationship, the uplink data packet to the corresponding DRB, and sends the uplink data packet to the terminal.

706. After receiving the uplink data packet from the DRB on the first interface, the relay determines, based on an obtained mapping relationship of the uplink data packet from the DRB on the first interface to a DRB on a second interface, a DRB, on which the uplink data packet is carried, on the second interface, maps the uplink data packet to the corresponding DRB on the second interface, and sends the uplink data packet to a base station.

Optionally, if the relay receives a plurality of uplink data packets sent by terminals, after aggregating uplink data packets of different terminals with same QoS, the relay carries the aggregated uplink data packets on a corresponding DRB on the second interface, and sends the aggregated uplink data packets to the base station.

Optionally, the base station may send, to the relay via dedicated signaling, the mapping relationship of the uplink data packet from the DRB on the first interface to the DRB on the second interface. When the relay needs to transmit an uplink data packet of the terminal, the relay maps the uplink data packet to the corresponding DRB based on the mapping relationship, and sends the uplink data packet to the base station.

Optionally, on the second interface, the relay may alternatively use a reflexive mapping manner. For example, the relay receives a downlink data packet of the terminal on a DRB A on the second interface, and the downlink data packet is mapped to a DRB B on the first interface for transmission. In this case, the relay receives an uplink data packet on the DRB B on the first interface, maps the uplink data packet to the DRB A on the second interface, and sends the uplink data packet to the base station.

707. The base station receives the uplink data packet from the corresponding DRB on the second interface, and sends, based on a mapping relationship that is between the uplink data packet and the DRB on the first interface and that is carried on the adaptation layer, the uplink data packet to a PDCP layer and an SDAP layer that correspond to the DRB on the first interface for processing.

708. The base station identifies, based on a QoS flow ID carried on an SDAP layer on the second interface, a QoS flow to which the uplink data packet belongs, and a session to which the uplink data packet belongs, maps the uplink data packet corresponding to the QoS flow ID to a GTP tunnel corresponding to the session of the terminal on a third interface, and sends the uplink data packet to a core network user plane device.

According to the implementations in FIG. 6 and FIG. 7A to FIG. 7C, in the embodiments of this application, the adaptation layer is introduced into the second interface of the control plane protocol stack and the user plane protocol stack of the wireless communications system to transmit data. A mapping relationship between a QoS flow of a data packet on the first interface and a DRB is determined by the base station. Therefore, complexity of processing performed by the relay can be reduced.

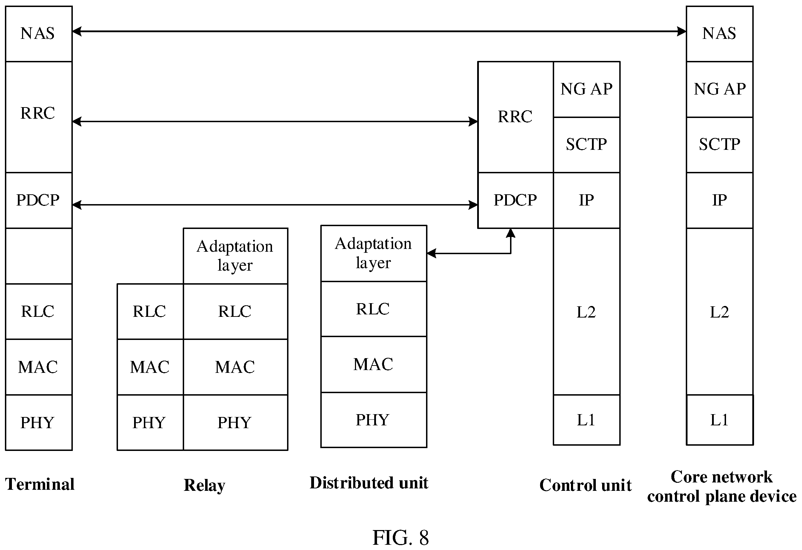

FIG. 8 shows a control plane protocol stack that is of the wireless communications system shown in FIG. 1 and that is used in a CU-DU architecture. On a first interface, a terminal and a relay each include an RLC layer, a MAC layer, and a PHY layer. On a second interface, the relay includes an adaptation layer, the RLC layer, the MAC layer, and the PHY layer; and a DU includes an RLC layer, a MAC layer, and a PHY layer. If the DU has the function of assigning an identifier on the first interface to the terminal, the DU further includes an adaptation layer to assign the identifier on the first interface to the terminal. A CU and the terminal each include a peer RRC layer and a peer PDCP layer. The CU is connected to the DU in a wired manner. If the CU has the function of assigning the identifier on the first interface to the terminal, the CU further includes an adaptation layer to assign the identifier on the first interface to the terminal. On a third interface, the CU and a core network control plane device each include an NGAP layer, an SCTP layer, an IP layer, an L2 layer, and an L1 layer. A peer NAS layer is established for each of the core network control plane device and the terminal. Functions of the SDAP layer and the adaptation layer are the same as those in FIG. 7. Details are not described herein again.

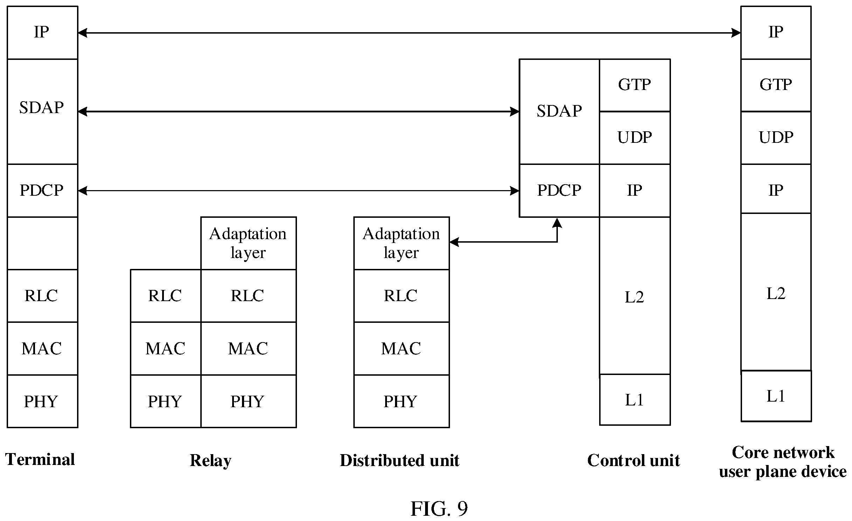

FIG. 9 is a schematic diagram of a user plane protocol stack corresponding to the control plane protocol stack shown in FIG. 8. On a first interface, a terminal and a relay each include an RLC layer, a MAC layer, and a PHY layer. On a second interface, the relay includes an adaptation layer, the RLC layer, the MAC layer, and the PHY layer; and a DU includes an RLC layer, a MAC layer, and a PHY layer. If the DU has the function of assigning an identifier on the first interface to the terminal, the DU further includes an adaptation layer to assign the identifier on the first interface to the terminal. A peer SDAP layer and a peer PDCP layer is established for each of the CU and the terminal. The CU is connected to the DU in a wired manner. If the CU has the function of assigning the identifier on the first interface to the terminal, the CU further includes an adaptation layer to assign the identifier on the first interface to the terminal. On a third interface, the CU and a core network control plane device each include a GTP layer, a UDP layer, an IP layer, an L2 layer, and an L1 layer. A peer IP layer is established for each of the core network control plane device and the terminal. The adaptation layer may be located in the CU or the DU. This depends on whether the CU or the DU assigns the identifier on the first interface to the terminal.

In FIG. 9, the base station of FIG. 7A to FIG. 7C is divided into the CU and the DU based on protocol layers. Therefore, on the second interface, functions of the base station on the SDAP layer and the PDCP layer (optionally, an adaptation layer is further included) are performed by the CU, functions below the PDCP layer (optionally, the adaptation layer is further included) are performed by the DU. For details, refer to related descriptions in the embodiments corresponding to FIG. 7A to FIG. 7C.

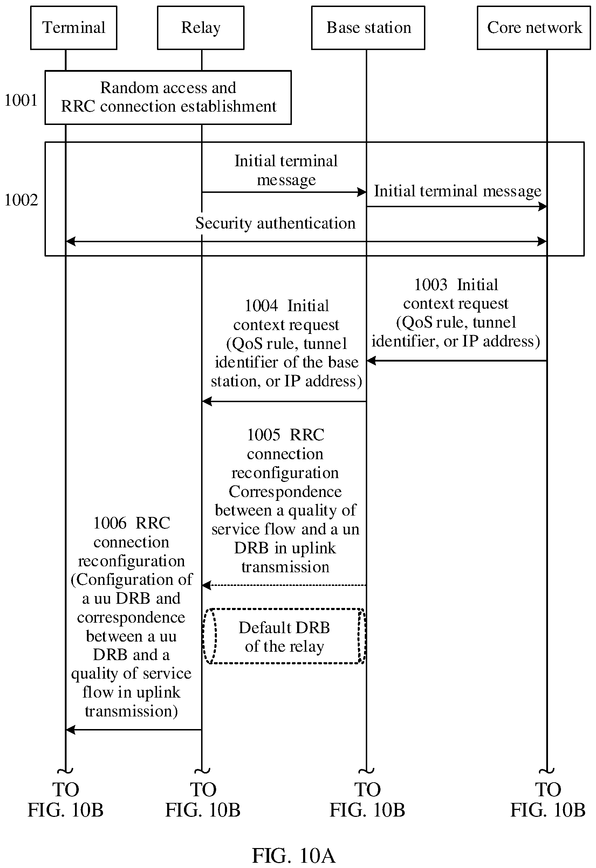

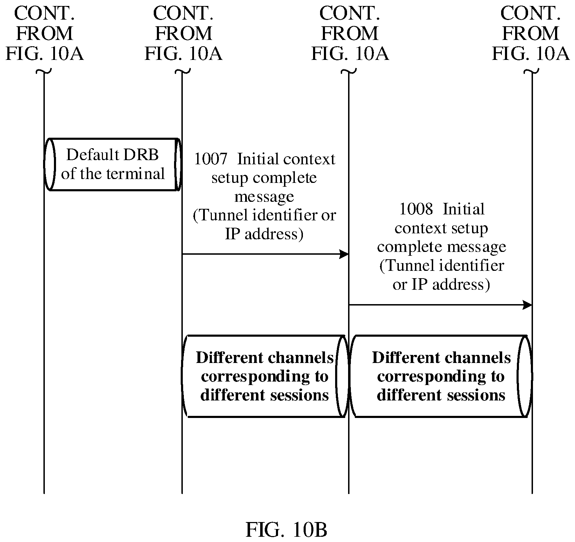

Based on the protocol stack architectures shown in FIG. 2 and FIG. 3A, an embodiment of this application provides a communication processing method. The processing method relates to how to establish a DRB on a first interface and a DRB on a second interface before data transmission. As shown in a schematic system interaction diagram in FIG. 10A and FIG. 10B, the following content is included.

1001. A terminal accesses a relay through a random access process, and establishes an RRC connection to the relay.

1002. The relay sends an NGAP message (for example, a terminal initial terminal message) to a core network device via a base station, to perform security authentication between the terminal and the core network.

1003. The core network device sends an initial context setup request to the base station, where the initial context setup request includes service QoS rule related parameters, a GTP tunnel identifier assigned by the core network device to a session of the terminal, and an IP address of the terminal.

The service QoS rule related parameters include related parameters such as an identifier of a session (session ID) to which a data packet of the terminal belongs, an identifier of a QoS flow (QoS flow ID) to which the data packet belongs, and a quality of service class identifier (QoS class identifier, QCI).

1004. The base station sends the initial context setup request to the relay, where the initial context request includes the service QoS rules related parameters, corresponding GTP layer tunnel identifiers assigned by the base station to different sessions of the terminal, and an IP address of the terminal.

1005. The base station triggers to establish a dedicated DRB on the second interface between the base station and the relay.

In a possible implementation, after receiving the initial context setup request sent by the core network device, the base station sends an RRC connection reconfiguration message to the relay based on the QoS rule related parameters carried in the message, to establish the corresponding DRB on the second interface, where the RRC connection reconfiguration message includes a configuration parameter of the corresponding DRB on the second interface. Optionally, the DRB is configured to transmit a guaranteed bit rate (guaranteed bit rate, GBR) service. Optionally, to perform uplink data transmission, the base station sends, to the relay, a mapping relationship between a QoS flow to which an uplink data packet belongs and the DRB on the second interface and an identifier of a session to which the uplink data packet of the terminal belongs, so that the relay maps the uplink data packet.

In another possible implementation, after receiving downlink data from a GTP tunnel established between the base station and a core network user plane device, the base station sends an RRC connection reconfiguration message to the relay, to establish a DRB on the second interface, where the RRC connection reconfiguration message includes a configuration parameter of the DRB on the second interface. Optionally, the DRB that is on the second interface and that is configured in this possible implementation is configured to transmit a non-GBR service. Optionally, to perform uplink data transmission, in a downlink data transmission process, the base station further sends, to the relay, an identifier of a session to which an uplink data packet of the terminal belongs, and a mapping relationship between an identifier of a QoS flow to which an uplink data packet belongs and the DRB on the second interface, so that the relay maps the uplink data.

1006. The relay configures a DRB on a first interface.

The relay sends an RRC connection reconfiguration message to the terminal, where the RRC connection reconfiguration message includes a configuration parameter of the DRB on the first interface. Optionally, the RRC connection reconfiguration message sent by the relay to the terminal includes a mapping relationship between the QoS flow to which the uplink data packet belongs and the DRB on the first interface.

1007. The relay sends an initial context setup complete message to the base station, where the initial context setup complete message includes GTP tunnel identifiers assigned by the relay to different sessions of the terminal and the IP address of the terminal.

1008. The base station sends an initial context setup complete message to the core network device, where the initial context setup complete message includes GTP tunnel identifiers assigned by the base station to different sessions of the terminal and the IP address of the terminal.

According to the technical solution shown in FIG. 10A and FIG. 10B, the relay, the base station, and the core network each include a peer NGAP layer and a GTP layer, the relay and the core network device are approximately directly connected to each other on the NGAP layer and the GTP layer, thereby improving efficiency of communication between the relay and the core network device.

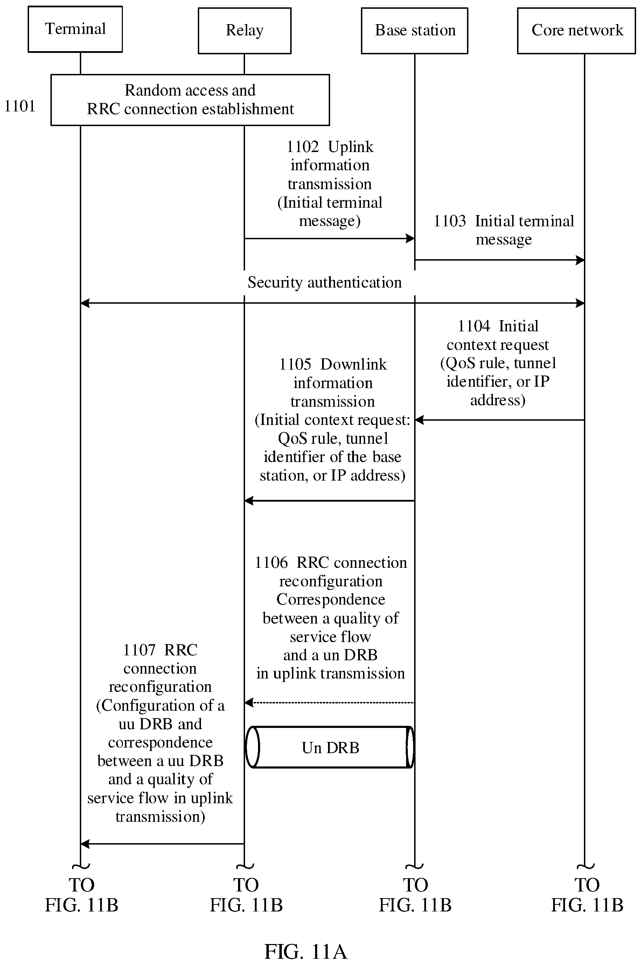

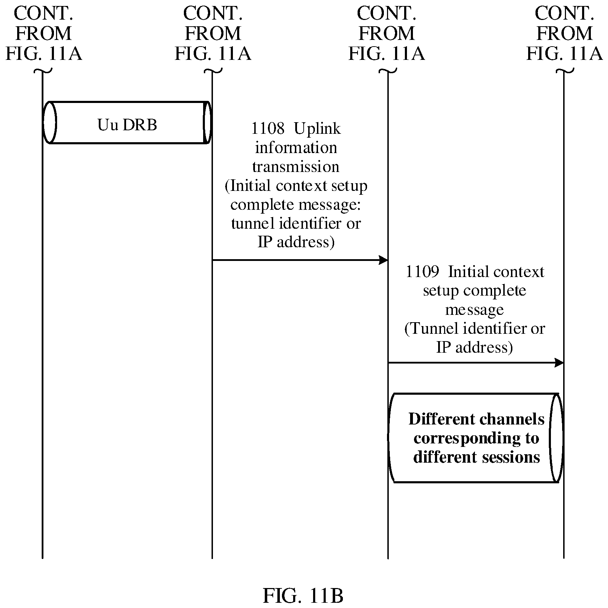

Based on the protocol stack architectures shown in FIG. 4 and FIG. 5A, an embodiment of this application provides a communication processing method. As shown in a schematic system interaction diagram in FIG. 11A and FIG. 11B, the following content is included.

1101. A terminal accesses a relay through a random access process, and establishes an RRC connection to the relay.

1102. The relay sends an RRC message to a base station, where the RRC message includes an NGAP (for example, a initial terminal message). Optionally, the RRC message is an uplink information transfer (ULInformationTransfer) message.

1103. The base station forwards the initial terminal message in the received RRC message to a core network device, to perform security authentication between the terminal and the core network.

1104. The core network device sends an initial context setup request to the base station, where the initial context setup request includes service QoS rule related parameters, GTP tunnel identifiers assigned by the core network device to different sessions of the terminal, and an IP address of the terminal.

1105. The base station sends an RRC message to the relay, where the RRC message carries the initial context request, the initial context setup request includes the service QoS rule related parameters, GTP layer tunnel identifiers assigned by the base station to different sessions of the terminal, and the IP address of the terminal.

Optionally, the RRC message sent by the base station is a downlink information transfer (ULInformationTransfer) message.

1106. The base station configures a DRB on a second interface.

A specific process is the same as that of 1005.

1107. The relay configures a DRB on a first interface.

A specific process is the same as that of 1006.

1108. The relay sends an initial context setup complete message to the base station, where the initial context setup complete message includes GTP tunnel identifiers assigned by the relay to different sessions of the terminal and the IP address of the terminal, and the initial context setup complete message is carried in an RRC message, for example, an uplink information transfer message.

1109. The base station sends an initial context setup complete message to the core network device, where the initial context setup complete message includes GTP tunnel identifiers assigned by the base station to different sessions of the terminal and the IP address of the terminal.

According to the communication processing method shown in FIG. 11A and

FIG. 11B, the relay does not need to establish a GTP tunnel, thereby reducing complexity of implementing the relay.

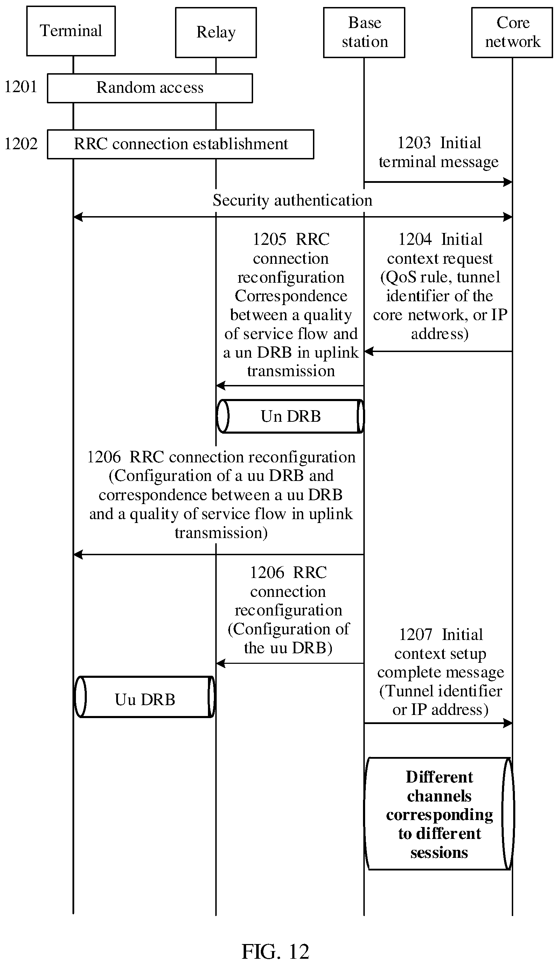

Based on the protocol stack architectures shown in FIG. 6 and FIG. 7A, an embodiment of this application provides a communication processing method. As shown in a schematic system interaction diagram in FIG. 12, the following content is included.

1201. A terminal accesses a relay through a random access process.

1202. The terminal establishes an RRC connection to a base station via the relay.

1203. The base station generates an initial terminal message, and sends the generated initial terminal message to a core network device, to perform security authentication between the terminal and the core network device.

1204. The core network device sends an initial context setup request to the terminal, where the request includes service QoS rules related parameters, GTP tunnel identifiers assigned by the core network device to different sessions of the terminal, and an IP address of the terminal.

1205. The base station sends an RRC connection reconfiguration message to the relay, where the RRC connection reconfiguration message includes a configuration parameter of a DRB on a second interface.

Optionally, the RRC connection reconfiguration message sent by the base station to the relay indicates that the configuration parameter of the DRB in the message is on the second interface.

The RRC connection reconfiguration message sent by the base station to the relay further includes a mapping relationship between a QoS flow to which an uplink data packet belongs and the DRB on the second interface, so that the relay carries the uplink data packet on the DRB that is on the second interface and that corresponds to the QoS flow to which the uplink data packet belongs.

1206. The base station sends an RRC connection reconfiguration parameter to the terminal via the relay, where the RRC connection reconfiguration message includes a configuration parameter of a DRB on a first interface. Optionally, the base station sends an RRC connection reconfiguration parameter to the relay, where the RRC connection reconfiguration message includes a configuration parameter of a DRB on a first interface.

Optionally, the RRC connection reconfiguration message sent by the base station to the terminal indicates that the configuration parameter of the DRB in the message is on the first interface.

The RRC connection reconfiguration message sent by the base station to the relay further includes a mapping relationship between an identifier of a QoS flow to which an uplink data packet belongs and the DRB on the first interface, so that the terminal carries the uplink data packet on the DRB that is on the first interface and that corresponds to the QoS flow to which the uplink data packet belongs.

1207. The base station sends an initial context setup complete message to the core network device, where the message includes GTP tunnel identifiers assigned by the base station to different sessions of the terminal and the IP address of the terminal.

According to the communication processing method shown in FIG. 12, the relay does not need to establish a GTP tunnel on the second interface, and a PDCP layer function, an RRC layer function, or an SDAP layer function does not need to be implemented on the relay. Therefore, complexity of implementing the relay is greatly reduced.

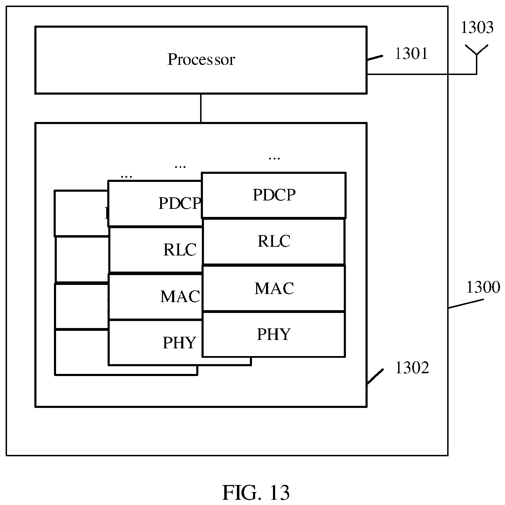

An embodiment of this application further provides a communications apparatus 1300. As shown in a schematic structural diagram of the communications apparatus 1300 in FIG. 13, the communications apparatus 1300 includes a processor 1301 and a memory 1302. The memory stores code. When the code is invoked by the processor, the processor may perform the method performed by the base station, the terminal, or the relay in the foregoing method embodiments. Specifically, the code includes a plurality of data structures, and each data structure is used to implement functions of the protocol layers in the foregoing control plane protocol stack or user plane protocol stack. For example, when the communications apparatus is a relay, a memory of the relay includes data structures for implementing functions of the protocol layers of a control plane protocol stack or a user plane protocol stack on a first interface, and data structures for implementing functions of protocol layers of a control plane protocol stack or a user plane protocol stack on a second interface.

Further, the communications apparatus 1300 further includes a physical antenna 1303, so that after running a function of each protocol layer, the processor 1301 sends processed data via the physical antenna.

Optionally, the communications apparatus may be a chip. The chip includes a processor including at least one gate circuit and a memory including at least one gate circuit. Each gate circuit includes at least one transistor (for example, a field effect transistor) connected via a wire. The chip may be a central processing unit (CPU), a field programmable gate array (FPGA), or a digital signal processor (DSP).

Persons skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on a chip system or one or more computer-usable storage media (including but not limited to a disk memory, a CD-ROM, an optical memory, and the like) that include computer-usable program code.

The present invention is described with reference to the flowcharts and/or block diagrams of the method, the apparatus (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, persons skilled in the art can make changes and modifications to these embodiments once they learn the basic inventive concept.

Obviously, persons skilled in the art can make various modifications and variations to the present invention without departing from the scope of the present invention. The present invention is intended to cover these modifications and variations provided that they fall within the scope of protection defined by the following claims.

## Claims

1. A relay, comprising a control plane protocol stack, wherein
the control plane protocol stack comprises a radio link control, RLC, layer, a media access control, MAC, layer, and a physical, PHY, layer that are on an interface between the relay and a terminal and that are respectively peering to the terminal;
the control plane protocol stack further comprises an adaptation layer, an RLC layer, a MAC layer, and a PHY layer that are on an interface between the relay and a base station and that are respectively peering to the base station;
in uplink transmission, the adaptation layer in the control plane protocol stack is configured to perform at least one of the following operations:
adding an identifier of the terminal to which an uplink radio resource control, RRC, message generated by the terminal belongs;
adding indication information, wherein the indication information is used to indicate a mapping relationship between the uplink RRC message and an signaling radio bearer, SRB, on the interface between the terminal and the relay; and
mapping an uplink data packet into which the uplink RRC message is encapsulated to an SRB or a data radio bearer, DRB, on the interface between the relay and the base station for transmission; and
in downlink transmission, the adaptation layer in the control plane protocol stack is configured to perform at least one of the following operations:
identifying, based on indication information carried on the adaptation layer, that the adaptation layer carries a downlink RRC message, and learning of a mapping relationship between the downlink RRC message and an SRB on the interface between the relay and the terminal; and
identifying, based on a terminal identifier carried on the adaptation layer, a terminal to which the downlink RRC message belongs;
**characterized in that,**
wherein the relay is configured to receive (1205) from the base station an RRC connection reconfiguration message comprising a configuration parameter of the DRB on the interface between the relay and the base station and indicating the configuration parameter is about the interface between the relay and the base station, and further including a mapping relationship between a QoS flow to which an uplink data packet belongs and the DRB on the interface between the relay and the base station;
wherein the relay is further configured to receive (1206) from the base station an RRC connection reconfiguration message comprising another configuration parameter of a DRB on the interface between the relay and the terminal and indicating the another configuration is about the interface between the relay and the terminal, and further including a mapping relationship between an identifier of a QoS flow to which an uplink data packet belongs and the DRB on the interface between the relay and the terminal.

2. A communication processing method, applied to a relay comprising a control plane protocol stack, wherein the control plane protocol stack comprises a radio link control, RLC, layer, a media access control, MAC, layer, and a physical, PHY, layer that are on an interface between the relay and a terminal and that are respectively peering to the terminal; the control plane protocol stack further comprises an adaptation layer, an RLC layer, a MAC layer, and a PHY layer that are on an interface between the relay and a base station and that are respectively peering to the base station; wherein the method comprises:
in uplink transmission, receiving (705), by the relay, an uplink data packet into which an uplink RRC message generated by the terminal is encapsulated; and after processing the uplink data packet on the adaptation layer in the control plane protocol stack, carrying, by the relay, the processed uplink data packet on the SRB or the DRB on the interface between the relay and the base station, and sending(706) the processed uplink data packet to the base station, wherein
the processing performed by the relay on the uplink data packet on the adaptation layer in the control plane protocol stack comprises at least one of the following operations:
adding indication information, wherein the indication information indicates that the adaptation layer in the control plane protocol stack carries a type of an RRC message;
adding an identifier of the terminal to which the uplink RRC message belongs; and
mapping the uplink data packet into which the uplink RRC message is encapsulated to the SRB or the DRB on the interface between the relay and the base station for transmission;
in downlink transmission, receiving(703), by the relay, a downlink data packet into which a downlink RRC message to be sent to the terminal is encapsulated, wherein the downlink data packet is sent by being carried on the SRB or the DRB on the interface between the relay and the base station, and the processing performed by the relay on the downlink data packet on the adaptation layer comprises at least one of the following operations:
identifying, based on indication information carried on the adaptation layer, that the adaptation layer carries the downlink RRC message, and learning of the mapping relationship between the downlink RRC message and the SRB on the interface between the relay and the terminal; and
identifying, based on a terminal identifier carried on the adaptation layer, an identifier of a terminal to which the downlink RRC message belongs;
**characterized in that,** the method further comprises:
receiving(1205) from the base station the RRC connection reconfiguration message comprising the configuration parameter of the DRB on the interface between the relay and the base station and indicating the configuration parameter is about the interface between the relay and the base station, and further including a mapping relationship between a QoS flow to which an uplink data packet belongs and the DRB on the interface between the relay and the base station;
receiving(1206) from the base station the RRC connection reconfiguration message comprising the another configuration parameter of the DRB on the interface between the relay and the terminal and indicating the another configuration is about the interface between the relay and the terminal, and further including a mapping relationship between an identifier of a QoS flow to which an uplink data packet belongs and the DRB on the interface between the relay and the terminal.

3. The relay according to claim 1, further comprising a user plane protocol stack, wherein
the user plane protocol stack comprises an RLC layer, a MAC layer, and a PHY layer that are on an interface between the relay and a terminal and that are respectively peering to the terminal;
the user plane protocol stack comprises an adaptation layer, an RLC layer, a MAC layer, and a PHY layer that are on an interface between the relay and a base station and that are respectively peering to the base station;
in uplink transmission, the adaptation layer in the user plane protocol stack is configured to perform at least one of the following operations:
adding an identifier of a terminal to which an uplink data packet belongs;
adding indication information, wherein the indication information is used to indicate a mapping relationship between the uplink data packet and a DRB on the interface between the terminal and the relay; and
mapping the uplink data packet to a DRB on the interface between the relay and the base station for transmission; and
in downlink transmission, the adaptation layer in the user plane protocol stack is configured to perform at least one of the following operations:
identifying, based on indication information carried on the adaptation layer in the user plane protocol stack, that the adaptation layer in the user plane protocol stack carries a downlink data packet, and learning of a mapping relationship between the downlink data packet and the DRB on the interface between the relay and the terminal; and
identifying, based on a terminal identifier carried on the adaptation layer in the user plane protocol stack, an identifier of the terminal to which the downlink data packet belongs.

4. The relay according to claim 3, wherein
in uplink transmission, the adaptation layer in the user plane protocol stack is further configured to perform at least one of the following operations:
mapping an uplink data packet transmitted on the DRB on the interface between the terminal and the relay to a DRB on the interface between the relay and the base station for transmission; and
aggregating uplink data packets that are of the terminal and another terminal and that have same quality of service, and mapping the aggregated uplink data packets to a same DRB on the interface between the relay and the base station for transmission.

5. The relay according to claim 3 or 4, wherein
in downlink transmission, the adaptation layer in the user plane protocol stack is further configured to recover, from an aggregation packet transmitted on the DRB on the interface between the relay and the base station, the downlink data packet of the terminal.

6. A communication processing method according to claim 2, wherein the relay further comprises a user plane protocol stack, wherein the user plane protocol stack comprises an RLC layer, a MAC layer, and a PHY layer that are on an interface between the relay and a terminal and that are respectively peering to the terminal; the user plane protocol stack further comprises an adaptation layer, an RLC layer, a MAC layer, and a PHY layer that are on an interface between the relay and a base station and that are respectively peering to the base station; wherein the method comprises:
in uplink transmission, obtaining, by the relay, an uplink data packet of the terminal; and after processing the uplink data packet on the adaptation layer in the user plane protocol stack, carrying, by the relay, the processed uplink data packet on the DRB on the interface between the relay and the base station, and sending the processed uplink data packet to the base station, wherein
the processing performed by the relay on the uplink data packet on the adaptation layer in the user plane protocol stack comprises at least one of the following operations:
adding an identifier of the terminal to which the uplink data packet belongs;
adding indication information, wherein the indication information is used to indicate a mapping relationship between the uplink data packet and the DRB on the interface between the terminal and the relay; and
mapping the uplink data packet to the DRB on the interface between the relay and the base station for transmission;
in downlink transmission, obtaining, by the relay, a downlink data packet of the terminal, wherein the downlink data packet is carried on the DRB on the interface between the relay and the base station, and the processing performed by the relay on the downlink data packet on the adaptation layer in the user plane protocol stack comprises at least one of the following operations:
identifying, based on indication information carried on the adaptation layer in the user plane protocol stack, that the adaptation layer in the user plane protocol stack carries the downlink data packet, and learning of a mapping relationship between the downlink data packet and the DRB on the interface between the relay and the terminal; and
identifying, based on a terminal identifier carried on the adaptation layer, an identifier of the terminal to which the downlink data packet belongs.

7. The method according to claim 6, wherein
in uplink transmission, the relay further performs at least one of the following operations on the adaptation layer:
mapping an uplink data packet transmitted on the DRB on the interface between the terminal and the relay to the DRB on the interface between the relay and the base station for transmission; and
aggregating uplink data packets that are of the terminal and another terminal and that have same quality of service, and mapping the aggregated uplink data packets to a same DRB on the interface between the relay and the base station for transmission.

8. The method according to claim 6, wherein
in downlink transmission, the processing performed by the relay on the downlink data packet on the adaptation layer in the user plane protocol stack further comprises at least the following operation:
recovering, from an aggregation packet transmitted on the DRB on the interface between the relay and the base station, the downlink data packet of the terminal.

9. The method according to claim 7, wherein
the mapping, by the relay, an uplink data packet transmitted on the DRB on the interface between the terminal and the relay to the DRB on the interface between the relay and the base station for transmission comprises at least one of the following operations:
mapping, by the relay based on the obtained mapping relationship between the DRB on the interface between the relay and the terminal and the DRB on the interface between the relay and the base station, the uplink data packet carried on the DRB on the interface between the relay and the terminal to a corresponding DRB on the interface between the relay and the base station; or
mapping, by the relay based on the mapping relationship between the DRB on the interface between the relay and the terminal and the DRB on the interface between the relay and the base station in downlink transmission, the uplink data packet carried on the DRB between the relay and the terminal to a corresponding DRB on the interface between the relay and the base station.

10. Abase station, comprising a control plane protocol stack, wherein
the control plane protocol stack comprises a radio resource control, RRC, layer and a packet data convergence protocol, PDCP, layer that are respectively peering to a terminal;
the control plane protocol stack further comprises an adaptation layer, a radio link control, RLC, layer, a media access control, MAC, layer, and a physical, PHY, layer that are respectively peering to a relay;
in downlink transmission, the adaptation layer in the control plane protocol stack is configured to perform at least one of the following operations:
adding an identifier of a terminal to which a downlink RRC message encapsulated into a downlink data packet belongs;
adding indication information, wherein the indication information is used to indicate a mapping relationship between the downlink RRC message encapsulated into the downlink data packet and an SRB on an interface between the terminal and the relay; and
mapping the downlink data packet to an signaling radio bearer, SRB, or a data radio bearer, DRB, on an interface between the relay and the base station for transmission; and
in uplink transmission, the adaptation layer in the control plane protocol stack is configured to perform at least one of the following operations:
identifying, based on indication information carried on the adaptation layer in the control plane protocol stack, that the adaptation layer in the control plane protocol stack carries an uplink RRC message, and learning of a mapping relationship between the uplink RRC message and the SRB on the interface between the relay and the terminal; and
identifying, based on a terminal identifier carried on the adaptation layer, an identifier of a terminal to which the uplink RRC message belongs;
**characterized in that,**
wherein the base station is configured to send (1205) to the relay an RRC connection reconfiguration message comprising a configuration parameter of the DRB on the interface between the relay and the base station and indicating the configuration parameter is about the interface between the relay and the base station, and further including a mapping relationship between a QoS flow to which an uplink data packet belongs and the DRB on the interface between the relay and the base station;
wherein the base station is further configured to send (1206) to the relay an RRC connection reconfiguration message comprising another configuration parameter of a DRB on the interface between the relay and the terminal and indicating the another configuration is about the interface between the relay and the terminal, and further including a mapping relationship between an identifier of a QoS flow to which an uplink data packet belongs and the DRB on the interface between the relay and the terminal.

11. The base station according to claim 10, further comprising a user plane protocol stack, wherein
the user plane protocol stack comprises a service data adaptation protocol, SDAP, layer and a PDCP layer that are respectively peering to a terminal;
the user plane protocol stack further comprises an adaptation layer, an RLC layer, a MAC layer, and a PHY layer that are respectively peering to a relay;
in downlink transmission, the SDAP layer in the user plane protocol stack is configured to perform at least one of the following operations:
adding an identifier of a quality of service flow to which a downlink data packet belongs; and
mapping the downlink data packet to a DRB on an interface between the terminal and the relay; and
in downlink transmission, the adaptation layer in the user plane protocol stack is configured to perform at least one of the following operations:
adding an identifier of a terminal to which the downlink data packet belongs; and
adding indication information, wherein the indication information is used to indicate a mapping relationship between the downlink data packet and the DRB on the interface between the terminal and the relay.

12. A communications system, comprising: the relay according to any one of claims 1 and 3-5 and the base station according to claim 10 or 11.

## Patentansprüche

1. Relais, umfassend einen Protokollstapel der Steuerebene, wobei
der Protokollstapel der Steuerebene eine Schicht zur Funkverbindungssteuerung (radio link control - RLC), eine Schicht zur Medienzugriffssteuerung (media access control - MAC) und eine physische (PHY) Schicht umfasst, die sich auf einer Schnittstelle zwischen dem Relais und einem Endgerät befinden und die jeweils mit dem Endgerät verbunden sind;
der Protokollstapel der Steuerebene ferner eine Anpassungsschicht, eine RLC-Schicht, eine MAC-Schicht und eine PHY-Schicht umfasst, die sich auf einer Schnittstelle zwischen dem Relais und einer Basisstation befinden und die jeweils mit der Basisstation verbunden sind;
bei der Uplink-Übertragung die Anpassungsschicht im Protokollstapel der Steuerebene dazu konfiguriert ist, mindestens eine der folgenden Operationen durchzuführen:
Hinzufügen einer Kennung des Endgeräts, zu dem eine durch das Endgerät erzeugte Nachricht zur Uplink-Funkressourcensteuerung (Radio Resource Control - RRC) gehört;
Hinzufügen von Anzeigeinformationen, wobei die Anzeigeinformationen verwendet werden, um eine Abbildungsbeziehung zwischen der Uplink-RRC-Nachricht und einem Signalisierungsfunkträger (signaling radio bearer - SRB) auf der Schnittstelle zwischen dem Endgerät und dem Relais anzuzeigen;
und
Abbilden eines Uplink-Datenpakets, in das die Uplink-RRC-Nachricht eingekapselt ist, auf einen SRB oder einen Datenfunkträger (data radio bearer - DRB) an der Schnittstelle zwischen dem Relais und der Basisstation zur Übertragung; und
bei der Downlink-Übertragung die Anpassungsschicht im Protokollstapel der Steuerebene dazu konfiguriert ist, mindestens eine der folgenden Operationen auszuführen:
Identifizieren, basierend auf den auf der Anpassungsschicht beförderten Anzeigeinformationen, dass die Anpassungsschicht eine Downlink-RRC-Nachricht befördert, und Lernen einer Abbildungsbeziehung zwischen der Downlink-RRC-Nachricht und einer SRB auf der Schnittstelle zwischen dem Relais und dem Endgerät; und
Identifizieren eines Endgeräts, zu dem die Downlink-RRC-Nachricht gehört, basierend auf einer Endgerätekennung, die auf der Anpassungsschicht befördert wird;
**dadurch gekennzeichnet, dass**
wobei das Relais dazu konfiguriert ist, von der Basisstation eine RRC-Verbindungsrekonfigurationsnachricht zu empfangen (1205), die einen Konfigurationsparameter des DRB auf der Schnittstelle zwischen dem Relais und der Basisstation umfasst und anzeigt, dass sich der Konfigurationsparameter auf die Schnittstelle zwischen dem Relais und der Basisstation bezieht, und ferner eine Abbildungsbeziehung zwischen einem QoS-Fluss, zu dem ein Uplink-Datenpaket gehört, und dem DRB auf der Schnittstelle zwischen dem Relais und der Basisstation beinhaltet;
wobei das Relais ferner dazu konfiguriert ist, von der Basisstation eine RRC-Verbindungsrekonfigurationsnachricht zu empfangen (1206), die einen anderen Konfigurationsparameter eines DRB auf der Schnittstelle zwischen dem Relais und dem Endgerät umfasst und anzeigt, dass sich die andere Konfiguration auf die Schnittstelle zwischen dem Relais und dem Endgerät bezieht, und ferner eine Abbildungsbeziehung zwischen einer Kennung eines QoS-Flusses, zu dem ein Uplink-Datenpaket gehört, und dem DRB auf der Schnittstelle zwischen dem Relais und dem Endgerät beinhaltet.

2. Kommunikationsverarbeitungsverfahren, das auf ein Relais angewendet wird, umfassend einen Protokollstapel, wobei der Protokollstapel der Steuerebene eine Schicht zur Funkverbindung (RLC), eine Schicht zur Medienzugriffssteuerung (MAC) und eine physische (PHY) Schicht umfasst, die sich auf einer Schnittstelle zwischen dem Relais und einem Endgerät befinden und die jeweils mit dem Endgerät verbunden sind; wobei der Protokollstapel der Steuerebene ferner eine Anpassungsschicht, eine RLC-Schicht, eine MAC-Schicht und eine PHY-Schicht umfasst, die sich auf einer Schnittstelle zwischen dem Relais und einer Basisstation befinden und die jeweils mit der Basisstation verbunden sind; wobei das Verfahren umfasst:
bei der Uplink-Übertragung, Empfangen (705) eines Uplink-Datenpakets, in das eine vom Endgerät gebildete Uplink-RRC-Nachricht eingekapselt ist, durch das Relais; und nach Verarbeitung des Uplink-Datenpakets auf der Anpassungsschicht im Protokollstapel der Steuerebene, Befördern des verarbeiteten Uplink-Datenpakets auf dem SRB oder dem DRB auf der Schnittstelle zwischen dem Relais und der Basisstation durch das Relais, und Senden (706) des verarbeiteten Uplink-Datenpakets an die Basisstation, wobei
die Verarbeitung, die durch das Relais an dem Uplink-Datenpaket auf der Anpassungsschicht in dem Protokollstapel der Steuerebene durchgeführt wird, mindestens eine der folgenden Operationen umfasst:
Hinzufügen von Anzeigeinformationen, wobei die Anzeigeinformationen anzeigen, dass die Anpassungsschicht im Protokollstapel der Steuerebene einen Typ einer RRC-Nachricht befördert;
Hinzufügen einer Kennung des Endgeräts, zu dem die Uplink-RRC-Nachricht gehört; und
Abbilden des Uplink-Datenpakets, in das die Uplink-RRC-Nachricht eingekapselt ist, auf den SRB oder den DRB an der Schnittstelle zwischen dem Relais und der Basisstation zur Übertragung;
bei der Downlink-Übertragung, Empfangen (703) eines Downlink-Datenpakets, in das eine an das Endgerät zu sendende Downlink-RRC-Nachricht eingekapselt ist, durch das Relais, wobei das Downlink-Datenpaket gesendet wird, indem es auf dem SRB oder dem DRB auf der Schnittstelle zwischen dem Relais und der Basisstation befördert wird, und die durch das Relais an dem Downlink-Datenpaket auf der Anpassungsschicht durchgeführte Verarbeitung mindestens eine der folgenden Operationen umfasst:
Identifizieren, basierend auf den auf der Anpassungsschicht beförderten Anzeigeinformationen, dass die Anpassungsschicht die Downlink-RRC-Nachricht befördert, und Lernen der Abbildungsbeziehung zwischen der Downlink-RRC-Nachricht und der SRB auf der Schnittstelle zwischen dem Relais und dem Endgerät;
und
Identifizieren einer Kennung eines Endgerätes, zu dem die Downlink-RRC-Nachricht gehört, basierend auf einer Endgerätekennung, die auf der Anpassungsschicht befördert wird;
**dadurch gekennzeichnet, dass das Verfahren ferner umfasst:**
Empfangen (1205) von der Basisstation der RRC-Verbindungsrekonfigurationsnachricht, die den Konfigurationsparameter des DRB auf der Schnittstelle zwischen dem Relais und der Basisstation umfasst und anzeigt, dass sich der Konfigurationsparameter auf die Schnittstelle zwischen dem Relais und der Basisstation bezieht, und ferner eine Abbildungsbeziehung zwischen einem QoS-Fluss, zu dem ein Uplink-Datenpaket gehört, und dem DRB auf der Schnittstelle zwischen dem Relais und der Basisstation beinhaltet;
Empfangen (1206) von der Basisstation der RRC-Verbindungsrekonfigurationsnachricht, die den anderen Konfigurationsparameter des DRB auf der Schnittstelle zwischen dem Relais und dem Endgerät umfasst und anzeigt, dass sich die andere Konfiguration auf die Schnittstelle zwischen dem Relais und dem Endgerät bezieht, und ferner eine Abbildungsbeziehung zwischen einer Kennung eines QoS-Flusses, zu dem ein Uplink-Datenpaket gehört, und dem DRB auf der Schnittstelle zwischen dem Relais und dem Endgerät beinhaltet.

3. Relais gemäß Anspruch 1, ferner umfassend einen Protokollstapel auf Benutzerebene, wobei
der Protokollstapel der Benutzerebene eine RLC-Schicht, eine MAC-Schicht und eine PHY-Schicht umfasst, die sich an einer Schnittstelle zwischen dem Relais und einem Endgerät befinden und die jeweils mit dem Endgerät verbunden sind;
der Protokollstapel der Benutzerebene eine Anpassungsschicht, eine RLC-Schicht, eine MAC-Schicht und eine PHY-Schicht umfasst, die sich auf einer Schnittstelle zwischen dem Relais und einer Basisstation befinden und die jeweils mit der Basisstation verbunden sind;
bei der Uplink-Übertragung die Anpassungsschicht im Protokollstapel der Benutzerebene dazu konfiguriert ist, mindestens eine der folgenden Operationen durchzuführen:
Hinzufügen einer Kennung eines Endgeräts, zu dem ein Uplink-Datenpaket gehört;
Hinzufügen von Anzeigeinformationen, wobei die Anzeigeinformationen verwendet werden, um eine Abbildungsbeziehung zwischen dem Uplink-Datenpaket und einem DRB auf der Schnittstelle zwischen dem Endgerät und dem Relais anzuzeigen; und
Abbilden des Uplink-Datenpakets auf einen DRB an der Schnittstelle zwischen dem Relais und der Basisstation zur Übertragung; und
bei der Downlink-Übertragung die Anpassungsschicht im Protokollstapel der Benutzerebene so konfiguriert ist, dass sie mindestens eine der folgenden Operationen ausführt:
Identifizieren, basierend auf Anzeigeinformationen, die auf der Anpassungsschicht im Protokollstapel der Benutzerebene befördert werden, dass die Anpassungsschicht im Protokollstapel der Benutzerebene ein Downlink-Datenpaket befördert, und Lernen einer Abbildungsbeziehung zwischen dem Downlink-Datenpaket und dem DRB auf der Schnittstelle zwischen dem Relais und dem Endgerät; und
Identifizieren einer Kennung des Endgeräts, zu dem das Downlink-Datenpaket gehört, basierend auf einer Endgerätekennung, die auf der Anpassungsschicht im Protokollstapel der Benutzerebene befördert wird.

4. Relais gemäß Anspruch 3, wobei
bei der Uplink-Übertragung die Anpassungsschicht im Protokollstapel der Benutzerebene ferner dazu konfiguriert ist, mindestens eine der folgenden Operationen durchzuführen:
Abbilden eines Uplink-Datenpaketes, das auf dem DRB an der Schnittstelle zwischen dem Endgerät und dem Relais übertragen wird, auf einen DRB an der Schnittstelle zwischen dem Relais und der Basisstation zur Übertragung; und
Aggregieren von Uplink-Datenpaketen, die von dem Endgerät und einem anderen Endgerät stammen und die gleiche Dienstqualität aufweisen, und Abbilden der aggregierten Uplink-Datenpakete auf einen gleichen DRB an der Schnittstelle zwischen dem Relais und der Basisstation zur Übertragung.

5. Relais gemäß Anspruch 3 oder 4, wobei
bei der Downlink-Übertragung ist die Anpassungsschicht im Protokollstapel der Benutzerebene ferner dazu konfiguriert, aus einem Aggregationspaket, das auf dem DRB auf der Schnittstelle zwischen dem Relais und der Basisstation übertragen wird, das Downlink-Datenpaket des Endgeräts wiederherzustellen.

6. Kommunikationsverarbeitungsverfahren gemäß Anspruch 2, wobei das Relais ferner einen Protokollstapel der Benutzerebene umfasst, wobei der Protokollstapel der Benutzerebene eine RLC-Schicht, eine MAC-Schicht und eine PHY-Schicht umfasst, die sich auf einer Schnittstelle zwischen dem Relais und einem Endgerät befinden und die jeweils mit dem Endgerät verbunden sind; wobei der Protokollstapel der Benutzerebene ferner eine Anpassungsschicht, eine RLC-Schicht, eine MAC-Schicht und eine PHY-Schicht umfasst, die sich auf einer Schnittstelle zwischen dem Relais und einer Basisstation befinden und die jeweils mit der Basisstation verbunden sind; wobei das Verfahren umfasst:
bei der Uplink-Übertragung, Erlangen eines Uplink-Datenpakets des Endgeräts durch das Relais; und nach Verarbeiten des Uplink-Datenpakets auf der Anpassungsschicht im Protokollstapel der Benutzerebene, Befördern des verarbeiteten Uplink-Datenpakets durch das Relais auf dem DRB auf der Schnittstelle zwischen dem Relais und der Basisstation, und Senden des verarbeiteten Uplink-Datenpakets an die Basisstation, wobei
die Verarbeitung, die durch das Relais an dem Uplink-Datenpaket auf der Anpassungsschicht in dem Protokollstapel der Benutzerebene durchgeführt wird, mindestens eine der folgenden Operationen umfasst:
Hinzufügen einer Kennung des Endgeräts, zu dem das Uplink-Datenpaket gehört;
Hinzufügen von Anzeigeinformationen, wobei die Anzeigeinformationen verwendet werden, um eine Abbildungsbeziehung zwischen dem Uplink-Datenpaket und dem DRB auf der Schnittstelle zwischen dem Endgerät und dem Relais anzuzeigen; und
Abbilden des Uplink-Datenpakets auf den DRB an der Schnittstelle zwischen dem Relais und der Basisstation zur Übertragung;
bei der Downlink-Übertragung, Erlangen eines Downlink-Datenpakets des Endgeräts durch das Relais, wobei das Downlink-Datenpaket auf dem DRB auf der Schnittstelle zwischen dem Relais und der Basisstation befördert wird und die Verarbeitung, die durch das Relais an dem Downlink-Datenpaket auf der Anpassungsschicht im Protokollaufbau der Benutzerebene durchgeführt wird, mindestens eine der folgenden Operationen umfasst:
Identifizieren, basierend auf Anzeigeinformationen, die auf der Anpassungsschicht im Protokollstapel der Benutzerebene befördert werden, dass die Anpassungsschicht im Protokollstapel der Benutzerebene das Downlink-Datenpaket befördert, und Lernen einer Abbildungsbeziehung zwischen dem Downlink-Datenpaket und dem DRB auf der Schnittstelle zwischen dem Relais und dem Endgerät; und
Identifizieren einer Kennung des Endgeräts, zu dem das Downlink-Datenpaket gehört, basierend auf einer Endgerätekennung, die auf der Anpassungsschicht befördert wird.

7. Verfahren gemäß Anspruch 6, wobei
bei der Uplink-Übertragung das Relais ferner mindestens eine der folgenden Operationen auf der Anpassungsschicht durchführt:
Abbilden eines Uplink-Datenpaketes, das auf dem DRB an der Schnittstelle zwischen dem Endgerät und dem Relais übertragen wird, auf dem DRB an der Schnittstelle zwischen dem Relais und der Basisstation zur Übertragung; und
Aggregieren von Uplink-Datenpaketen, die von dem Endgerät und einem anderen Endgerät stammen und die gleiche Dienstqualität aufweisen, und Abbilden der aggregierten Uplink-Datenpakete auf einen gleichen DRB an der Schnittstelle zwischen dem Relais und der Basisstation zur Übertragung.

8. Verfahren gemäß Anspruch 6, wobei
bei der Downlink-Übertragung die durch das Relais an dem Downlink-Datenpaket auf der Anpassungsschicht in dem Protokollstapel der Benutzerebene durchgeführte Verarbeitung ferner mindestens die folgende Operation umfasst:
Wiederherstellen des Downlink-Datenpakets des Endgeräts aus einem Aggregationspaket, das auf dem DRB an der Schnittstelle zwischen dem Relais und der Basisstation übertragen wird.

9. Verfahren gemäß Anspruch 7, wobei
das Abbilden eines auf dem DRB auf der Schnittstelle zwischen dem Endgerät und dem Relais übertragenen Uplink-Datenpakets auf den DRB auf der Schnittstelle zwischen dem Relais und der Basisstation zur Übertragung durch das Relais mindestens eine der folgenden Operationen umfasst:
Abbilden des auf dem DRB auf der Schnittstelle zwischen dem Relais und dem Endgerät beförderten Uplink-Datenpakets durch das Relais basierend auf der erlangten Abbildungsbeziehung zwischen dem DRB auf der Schnittstelle zwischen dem Relais und dem Endgerät und dem DRB auf der Schnittstelle zwischen dem Relais und der Basisstation auf einen entsprechenden DRB auf der Schnittstelle zwischen dem Relais und der Basisstation; oder
Abbilden des auf dem DRB zwischen dem Relais und dem Endgerät beförderten Uplink-Datenpakets durch das Relais basierend auf der Abbildungsbeziehung zwischen dem DRB auf der Schnittstelle zwischen dem Relais und dem Endgerät und dem DRB auf der Schnittstelle zwischen dem Relais und der Basisstation bei der Downlink-Übertragung auf einen entsprechenden DRB auf der Schnittstelle zwischen dem Relais und der Basisstation.

10. Basisstation, umfassend einen Protokollstapel der Steuerebene, wobei
der Protokollstapel der Steuerebene eine Schicht der Funkressourcensteuerung (RRC) und eine Schicht des Paketdatenkonvergenzprotokolls (Packet Data Convergence Protocol - PDCP) umfasst, die jeweils mit einem Endgerät verbunden sind;
der Protokollstapel der Steuerebene ferner eine Anpassungsschicht, eine Schicht der Funkverbindungssteuerung (RLC), eine Schicht der Medienzugriffssteuerung (MAC) und eine physische (PHY) Schicht umfasst, die jeweils mit einem Relais verbunden sind;
bei der Downlink-Übertragung die Anpassungsschicht im Protokollstapel der Steuerebene dazu konfiguriert ist, mindestens eine der folgenden Operationen auszuführen:
Hinzufügen einer Kennung eines Endgerätes, zu dem eine in ein Downlink-Datenpaket eingekapselte RRC-Nachricht gehört;
Hinzufügen von Anzeigeinformationen, wobei die Anzeigeinformationen verwendet werden, um eine Abbildungsbeziehung zwischen der in das Downlink-Datenpaket eingekapselten Downlink-RRC-Nachricht und einem SRB auf einer Schnittstelle zwischen dem Endgerät und dem Relais anzuzeigen;
und
Abbilden des Downlink-Datenpakets auf einen Signalisierungsfunkträger (SRB) oder einen Datenfunkträger (DRB) auf einer Schnittstelle zwischen dem Relais und der Basisstation zur Übertragung; und
bei der Uplink-Übertragung die Anpassungsschicht im Protokollstapel der Steuerebene dazu konfiguriert ist, mindestens eine der folgenden Operationen durchzuführen:
Identifizieren, basierend auf Anzeigeinformationen, die auf der Anpassungsschicht im Protokollstapel der Steuerebene befördert werden, dass die Anpassungsschicht im Protokollstapel der Steuerebene eine Uplink-RRC-Nachricht befördert, und Lernen einer Abbildungsbeziehung zwischen der Uplink-RRC-Nachricht und dem SRB auf der Schnittstelle zwischen dem Relais und dem Endgerät; und
Identifizieren einer Kennung eines Endgerätes, zu dem die Uplink-RRC-Nachricht gehört, basierend auf einer Endgerätekennung, die auf der Anpassungsschicht befördert wird;
**dadurch gekennzeichnet, dass**
wobei die Basisstation dazu konfiguriert ist, eine RRC-Verbindungsrekonfigurationsnachricht an das Relais zu senden (1205), die einen Konfigurationsparameter des DRB auf der Schnittstelle zwischen dem Relais und der Basisstation umfasst und anzeigt, dass sich der Konfigurationsparameter auf die Schnittstelle zwischen dem Relais und der Basisstation bezieht, und ferner eine Abbildungsbeziehung zwischen einem QoS-Fluss, zu dem ein Uplink-Datenpaket gehört, und dem DRB auf der Schnittstelle zwischen dem Relais und der Basisstation beinhaltet;
wobei die Basisstation ferner dazu konfiguriert ist, eine RRC-Verbindungsrekonfigurationsnachricht and das Relais zu senden (1206), die einen anderen Konfigurationsparameter eines DRB auf der Schnittstelle zwischen dem Relais und dem Endgerät umfasst und anzeigt, dass sich die andere Konfiguration auf die Schnittstelle zwischen dem Relais und dem Endgerät bezieht, und ferner eine Abbildungsbeziehung zwischen einer Kennung eines QoS-Flusses, zu dem ein Uplink-Datenpaket gehört, und dem DRB auf der Schnittstelle zwischen dem Relais und dem Endgerät beinhaltet.

11. Basisstation gemäß Anspruch 10, ferner umfassend einen Protokollstapel auf Benutzerebene, wobei
der Protokollstapel der Benutzerebene eine Schicht des Dienstdaten-Anpassungsprotokolls (Service Data Adaptation Protocol - SDAP) und eine PDCP-Schicht umfasst, die jeweils mit einem Endgerät verbunden sind;
der Protokollstapel der Benutzerebene ferner eine Anpassungsschicht, eine RLC-Schicht, eine MAC-Schicht und eine PHY-Schicht umfasst, die jeweils mit einem Relais verbunden sind;
bei der Downlink-Übertragung die SDAP-Schicht im Protokollstapel der Benutzerebene dazu konfiguriert ist, mindestens eine der folgenden Operationen durchzuführen:
Hinzufügen einer Kennung eines Dienstgüteflusses, zu dem ein Downlink-Datenpaket gehört; und
Abbilden des Downlink-Datenpakets auf einen DRB an einer Schnittstelle zwischen dem Endgerät und dem Relais; und
bei der Downlink-Übertragung die Anpassungsschicht im Protokollstapel der Benutzerebene so konfiguriert ist, dass sie mindestens eine der folgenden Operationen ausführt:
Hinzufügen einer Kennung eines Endgeräts, zu dem das Downlink-Datenpaket gehört; und
Hinzufügen von Anzeigeinformationen, wobei die Anzeigeinformationen verwendet werden, um eine Abbildungsbeziehung zwischen dem Downlink-Datenpaket und dem DRB auf der Schnittstelle zwischen dem Endgerät und dem Relais anzuzeigen.

12. Kommunikationssystem, umfassend: das Relais gemäß einem der Ansprüche 1 und 3-5 und die Basisstation gemäß Anspruch 10 oder 11.

## Revendications

1. Relais, comprenant une pile de protocoles de plan de commande, dans lequel
la pile de protocoles de plan de commande comprend une couche de commande de liaison radio, RLC, une couche de commande d'accès au support, MAC, et une couche physique, PHY, qui se trouvent sur une interface entre le relais et un terminal et qui sont respectivement d'homologue à homologue avec le terminal ;
la pile de protocoles de plan de commande comprend également une couche d'adaptation, une couche RLC, une couche MAC et une couche PHY, qui se trouvent sur une interface entre le relais et une station de base, et qui sont respectivement d'homologue à homologue avec la station de base ;
lors d'une transmission en liaison montante, la couche d'adaptation dans la pile de protocoles de plan de commande est configurée pour effectuer au moins l'une des opérations suivantes :
ajouter un identifiant du terminal auquel appartient un message de commande de ressources radio de liaison montante, RRC, généré par le terminal ;
ajouter des informations d'indication, dans lequel les informations d'indication sont utilisées pour indiquer une relation de mappage entre le message RRC de liaison montante et
un support radio de signalisation, SRB, sur l'interface entre le terminal et le relais ; et
mapper un paquet de données de liaison montante dans lequel le message RRC de liaison montante est encapsulé vers un SRB ou un support radio de données, DRB, sur l'interface entre le relais et la station de base pour la transmission ; et
lors d'une transmission en liaison descendante, la couche d'adaptation dans la pile de protocoles de plan de commande est configurée pour effectuer au moins l'une des opérations suivantes :
identifier, sur la base d'informations d'indication transportées sur la couche d'adaptation, que la couche d'adaptation transporte un message RRC de liaison descendante, et apprendre une relation de mappage entre le message RRC de liaison descendante et un SRB sur l'interface entre le relais et le terminal ; et
identifier, sur la base d'un identifiant de terminal transporté sur la couche d'adaptation, un terminal auquel appartient le message RRC de liaison descendante ;
**caractérisé en ce que**
dans lequel le relais est configuré pour recevoir (1205), en provenance de la station de base, un message de reconfiguration de connexion RRC comprenant un paramètre de configuration du DRB sur l'interface entre le relais et la station de base et indiquant que le paramètre de configuration concerne l'interface entre le relais et la station de base, et comportant également une relation de mappage entre un flux de QoS auquel appartient un paquet de données de liaison montante et le DRB sur l'interface entre le relais et la station de base ;
dans lequel le relais est également configuré pour recevoir (1206), en provenance de la station de base, un message de reconfiguration de connexion RRC comprenant un autre paramètre de configuration d'un DRB sur l'interface entre le relais et le terminal et indiquant que l'autre configuration concerne l'interface entre le relais et le terminal, et comportant également une relation de mappage entre un identifiant de flux de QoS auquel appartient un paquet de données de liaison montante et le DRB sur l'interface entre le relais et le terminal.

2. Procédé de traitement de communication, appliqué à un relais comprenant une pile de protocoles de plan de commande, dans lequel la pile de protocoles de plan de commande comprend une couche de commande de liaison radio, RLC, une couche de commande d'accès au support, MAC, et une couche physique, PHY, qui se trouvent sur une interface entre le relais et un terminal et qui sont respectivement d'homologue à homologue avec le terminal ; la pile de protocoles de plan de commande comprend également une couche d'adaptation, une couche RLC, une couche MAC et une couche PHY qui se trouvent sur une interface entre le relais et une station de base et qui sont respectivement d'homologue à homologue avec la station de base ; dans lequel le procédé comprend :
lors d'une transmission en liaison montante, la réception (705), par le relais, d'un paquet de données de liaison montante dans lequel un message RRC de liaison montante généré par le terminal est encapsulé ; et après avoir traité le paquet de données de liaison montante sur la couche d'adaptation dans la pile de protocoles de plan de commande, le transport, par le relais, du paquet de données de liaison montante traité sur le SRB ou le DRB sur l'interface entre le relais et la station de base, et l'envoi (706) du paquet de données de liaison montante traité vers la station de base, dans lequel
le traitement effectué par le relais sur le paquet de données de liaison montante sur la couche d'adaptation dans la pile de protocoles de plan de commande comprend au moins l'une des opérations suivantes :
ajouter des informations d'indication, dans lequel les informations d'indication indiquent que la couche d'adaptation dans la pile de protocoles de plan de commande transporte un type de message RRC ;
ajouter un identifiant du terminal auquel appartient le message RRC de liaison montante ; et
mapper le paquet de données de liaison montante dans lequel le message RRC de liaison montante est encapsulé au SRB ou au DRB sur l'interface entre le relais et la station de base pour la transmission ;
lors d'une transmission en liaison descendante, la réception (703), par le relais, d'un paquet de données de liaison descendante dans lequel un message RRC de liaison descendante à envoyer au terminal est encapsulé, dans lequel le paquet de données de liaison descendante est envoyé en étant transporté sur le SRB ou le DRB sur l'interface entre le relais et la station de base, et le traitement effectué par le relais sur le paquet de données de liaison descendante sur la couche d'adaptation comprend au moins l'une des opérations suivantes :
identifier, sur la base d'informations d'indication transportées sur la couche d'adaptation, que la couche d'adaptation transporte le message RRC de liaison descendante, et apprendre la relation de mappage entre le message RRC de liaison descendante et le SRB sur l'interface entre le relais et le terminal ; et
identifier, sur la base d'un identifiant de terminal transporté sur la couche d'adaptation, un identifiant d'un terminal auquel appartient le message RRC de liaison descendante ;
**caractérisé en ce que** le procédé comprend également :
la réception (1205), en provenance de la station de base, du message de reconfiguration de connexion RRC comprenant le paramètre de configuration du DRB sur l'interface entre le relais et la station de base et indiquant que le paramètre de configuration concerne l'interface entre le relais et la station de base, et comportant également une relation de mappage entre un flux de QoS auquel appartient un paquet de données de liaison montante et le DRB sur l'interface entre le relais et la station de base ;
la réception (1206), en provenance de la station de base, du message de reconfiguration de connexion RRC comprenant l'autre paramètre de configuration du DRB sur l'interface entre le relais et le terminal et indiquant que l'autre configuration concerne l'interface entre le relais et le terminal, et comportant également une relation de mappage entre un identifiant de flux de QoS auquel appartient un paquet de données de liaison montante et le DRB sur l'interface entre le relais et le terminal.

3. Relais selon la revendication 1, comprenant également une pile de protocoles de plan utilisateur, dans lequel
la pile de protocoles de plan utilisateur comprend une couche RLC, une couche MAC et une couche PHY, qui se trouvent sur une interface entre le relais et un terminal et qui sont respectivement d'homologue à homologue avec le terminal ;
la pile de protocoles de plan utilisateur comprend une couche d'adaptation, une couche RLC, une couche MAC et une couche PHY, qui se trouvent sur une interface entre le relais et une station de base, et qui sont respectivement d'homologue à homologue avec la station de base ;
lors d'une transmission en liaison montante, la couche d'adaptation dans la pile de protocoles de plan utilisateur est configurée pour effectuer au moins l'une des opérations suivantes :
ajouter un identifiant d'un terminal auquel appartient un paquet de données de liaison montante ;
ajouter des informations d'indication, dans lequel les informations d'indication sont utilisées pour indiquer une relation de mappage entre le paquet de données de liaison montante et un DRB sur l'interface entre le terminal et le relais ; et
mapper le paquet de données de liaison montante à un DRB sur l'interface entre le relais et la station de base pour la transmission ; et
lors d'une transmission en liaison descendante, la couche d'adaptation dans la pile de protocoles de plan utilisateur est configurée pour effectuer au moins l'une des opérations suivantes :
identifier, sur la base d'informations d'indication transportées sur la couche d'adaptation dans la pile de protocoles de plan utilisateur, que la couche d'adaptation dans la pile de protocoles de plan utilisateur transporte un paquet de données de liaison descendante, et apprendre une relation de mappage entre le paquet de données de liaison descendante et le DRB sur l'interface entre le relais et le terminal ; et
identifier, sur la base d'un identifiant de terminal transporté sur la couche d'adaptation dans la pile de protocoles de plan utilisateur, un identifiant du terminal auquel appartient le paquet de données de liaison descendante.

4. Relais selon la revendication 3, dans lequel lors d'une transmission en liaison montante, la couche d'adaptation dans la pile de protocoles de plan utilisateur est également configurée pour effectuer au moins l'une des opérations suivantes :
mapper un paquet de données de liaison montante transmis sur le DRB sur l'interface entre le terminal et le relais à un DRB sur l'interface entre le relais et la station de base pour la transmission ; et
agréger des paquets de données de liaison montante qui proviennent du terminal et d'un autre terminal et qui ont la même qualité de service, et mapper les paquets de données de liaison montante agrégés à un même DRB sur l'interface entre le relais et la station de base pour la transmission.

5. Relais selon la revendication 3 ou 4, dans lequel lors de la transmission en liaison descendante, la couche d'adaptation dans la pile de protocoles de plan utilisateur est également configurée pour récupérer, à partir d'un paquet d'agrégation transmis sur le DRB sur l'interface entre le relais et la station de base, le paquet de données de liaison descendante du terminal.

6. Procédé de traitement de communication selon la revendication 2, dans lequel le relais comprend également une pile de protocoles de plan utilisateur, dans lequel la pile de protocoles de plan utilisateur comprend une couche RLC, une couche MAC et une couche PHY, qui se trouvent sur une interface entre le relais et un terminal et qui sont respectivement d'homologue à homologue avec le terminal ; la pile de protocoles de plan utilisateur comprend également une couche d'adaptation, une couche RLC, une couche MAC et une couche PHY qui se trouvent sur une interface entre le relais et une station de base et qui sont respectivement d'homologue à homologue avec la station de base ; dans lequel le procédé comprend :
lors d'une transmission en liaison montante, l'obtention, par le relais, d'un paquet de données de liaison montante du terminal ; et après avoir traité le paquet de données de liaison montante sur la couche d'adaptation dans la pile de protocoles de plan utilisateur, le transport, par le relais, du paquet de données de liaison montante traité sur le DRB sur l'interface entre le relais et la station de base, et l'envoi du paquet de données de liaison montante traité vers la station de base, dans lequel
le traitement effectué par le relais sur le paquet de données de liaison montante sur la couche d'adaptation dans la pile de protocoles de plan utilisateur comprend au moins l'une des opérations suivantes :
ajouter un identifiant du terminal auquel appartient le paquet de données de liaison montante ;
ajouter des informations d'indication, dans lequel les informations d'indication sont utilisées pour indiquer une relation de mappage entre le paquet de données de liaison montante et le DRB sur l'interface entre le terminal et le relais ; et
mapper le paquet de données de liaison montante au DRB sur l'interface entre le relais et la station de base pour la transmission ;
lors d'une transmission en liaison descendante, l'obtention, par le relais, d'un paquet de données de liaison descendante du terminal, dans lequel le paquet de données de liaison descendante est transporté sur le DRB sur l'interface entre le relais et la station de base, et le traitement effectué par le relais sur le paquet de données de liaison descendante sur la couche d'adaptation dans la pile de protocoles de plan utilisateur comprend au moins l'une des opérations suivantes :
identifier, sur la base d'informations d'indication transportées sur la couche d'adaptation dans la pile de protocoles de plan utilisateur, que la couche d'adaptation dans la pile de protocoles de plan utilisateur transporte le paquet de données de liaison descendante, et apprendre une relation de mappage entre le paquet de données de liaison descendante et le DRB sur l'interface entre le relais et le terminal ; et
identifier, sur la base d'un identifiant de terminal transporté sur la couche d'adaptation, un identifiant du terminal auquel appartient le paquet de données de liaison descendante.

7. Procédé selon la revendication 6, dans lequel
lors d'une transmission en liaison montante, le relais effectue également au moins l'une des opérations suivantes sur la couche d'adaptation :
mapper un paquet de données de liaison montante transmis sur le DRB sur l'interface entre le terminal et le relais au DRB sur l'interface entre le relais et la station de base pour la transmission ; et
agréger des paquets de données de liaison montante qui proviennent du terminal et d'un autre terminal et qui ont la même qualité de service, et mapper les paquets de données de liaison montante agrégés à un même DRB sur l'interface entre le relais et la station de base pour la transmission.

8. Procédé selon la revendication 6, dans lequel
lors d'une transmission en liaison descendante, le traitement effectué par le relais sur le paquet de données de liaison descendante sur la couche d'adaptation dans la pile de protocoles de plan utilisateur comprend également au moins l'opération suivante :
récupérer, à partir d'un paquet d'agrégation transmis sur le DRB sur l'interface entre le relais et la station de base, le paquet de données de liaison descendante du terminal.

9. Procédé selon la revendication 7, dans lequel
le mappage, par le relais, d'un paquet de données de liaison montante transmis sur le DRB sur l'interface entre le terminal et le relais au DRB sur l'interface entre le relais et la station de base pour la transmission comprend au moins l'une des opérations suivantes :
mapper, par le relais sur la base de la relation de mappage obtenue entre le DRB sur l'interface entre le relais et le terminal et le DRB sur l'interface entre le relais et la station de base, le paquet de données de liaison montante transporté sur le DRB sur l'interface entre le relais et le terminal avec un DRB correspondant sur l'interface entre le relais et la station de base ; ou
mapper, par le relais sur la base de la relation de mappage obtenue entre le DRB sur l'interface entre le relais et le terminal et le DRB sur l'interface entre le relais et la station de base lors de la transmission en liaison descendante, le paquet de données de liaison montante transporté sur le DRB entre le relais et le terminal avec un DRB correspondant sur l'interface entre le relais et la station de base.

10. Station de base, comprenant une pile de protocoles de plan de commande, dans lequel
la pile de protocoles de plan de commande comprend une couche de commande de ressources radio, RRC, et une couche de protocole de convergence de données par paquets, PDCP, qui sont respectivement d'homologue à homologue avec un terminal ;
la pile de protocoles de plan de commande comprend également une couche d'adaptation, une couche de commande de liaison radio, RLC, une couche de commande d'accès au support, MAC, et une couche physique, PHY, qui sont respectivement d'homologue à homologue avec un relais ;
lors d'une transmission en liaison descendante, la couche d'adaptation dans la pile de protocoles de plan de commande est configurée pour effectuer au moins l'une des opérations suivantes :
ajouter un identifiant d'un terminal auquel appartient un message RRC de liaison descendante encapsulé dans un paquet de données de liaison descendante ;
ajouter des informations d'indication, dans lequel les informations d'indication sont utilisées pour indiquer une relation de mappage entre le message RRC de liaison descendante encapsulé dans le paquet de données de liaison descendante et un SRB sur une interface entre le terminal et le relais ; et
mapper le paquet de données de liaison descendante sur un support radio de signalisation, SRB, ou un support radio de données, DRB, sur une interface entre le relais et la station de base pour la transmission ; et
lors d'une transmission en liaison montante, la couche d'adaptation dans la pile de protocoles de plan de commande est configurée pour effectuer au moins l'une des opérations suivantes :
identifier, sur la base d'informations d'indication transportées sur la couche d'adaptation dans la pile de protocoles de plan de commande, que la couche d'adaptation dans la pile de protocoles de plan de commande transporte un message RRC de liaison montante, et apprendre une relation de mappage entre le message RRC de liaison montante et le SRB sur l'interface entre le relais et le terminal ; et
identifier, sur la base d'un identifiant de terminal transporté sur la couche d'adaptation, un identifiant d'un terminal auquel appartient le message RRC de liaison montante ;
**caractérisé en ce que,**
dans lequel la station de base est configurée pour envoyer (1205) au relais un message de reconfiguration de connexion RRC comprenant un paramètre de configuration du DRB sur l'interface entre le relais et la station de base et indiquant que le paramètre de configuration concerne l'interface entre le relais et la station de base, et comportant également une relation de mappage entre un flux de QoS auquel appartient un paquet de données de liaison montante, et le DRB sur l'interface entre le relais et la station de base ;
dans lequel la station de base est également configurée pour envoyer (1206) au relais un message de reconfiguration de connexion RRC comprenant un autre paramètre de configuration d'un DRB sur l'interface entre le relais et le terminal et indiquant que l'autre configuration concerne l'interface entre le relais et le terminal, et comportant également une relation de mappage entre un identifiant de flux de QoS auquel appartient un paquet de données de liaison montante, et le DRB sur l'interface entre le relais et le terminal.

11. Station de base selon la revendication 10, comprenant également une pile de protocoles de plan utilisateur, dans laquelle
la pile de protocoles de plan utilisateur comprend une couche de protocole d'adaptation de données de service, SDAP, et une couche PDCP qui sont respectivement d'homologue à homologue avec un terminal ;
la pile de protocoles de plan utilisateur comprend également une couche d'adaptation, une couche RLC, une couche MAC et une couche PHY qui sont respectivement d'homologue à homologue avec un relais ;
lors d'une transmission en liaison descendante, la couche SDAP dans la pile de protocoles de plan utilisateur est configurée pour effectuer au moins l'une des opérations suivantes :
ajouter un identifiant d'un flux de qualité de service auquel appartient un paquet de données de liaison descendante ; et
mapper le paquet de données de liaison descendante à un DRB sur une interface entre le terminal et le relais ; et
lors d'une transmission en liaison descendante, la couche d'adaptation dans la pile de protocoles de plan utilisateur est configurée pour effectuer au moins l'une des opérations suivantes :
ajouter un identifiant d'un terminal auquel appartient le paquet de données de liaison descendante ; et
ajouter des informations d'indication, dans lequel les informations d'indication sont utilisées pour indiquer une relation de mappage entre le paquet de données de liaison descendante et le DRB sur l'interface entre le terminal et le relais.

12. Système de communications, comprenant : le relais selon l'une quelconque des revendications 1 et 3 à 5 et la station de base selon la revendication 10 ou 11.
